# EUROPEAN PATENT SPECIFICATION

(11) **EP 4 024 911 B1**
(45) Date of publication and mention of the grant of the patent: **19.08.2026**
(21) Application number: 19946380.3
(22) Date of filing: 23.09.2019
(51) Int. Cl.: H04W 4/06, H04L 1/1607, H04L 1/1829, H04W 74/0833

(54) **MULTICAST TRANSMISSION CONTROL METHOD AND RELATED DEVICE**
VERFAHREN STEUERUNG EINER MULTICAST-ÜBERTRAGUNG UND ZUGEHÖRIGE VORRICHTUNG
PROCÉDÉ DE COMMANDE DE TRANSMISSION DE MULTIDIFFUSION ET DISPOSITIF ASSOCIÉ

(43) Date of publication of application: 06.07.2022
(73) Proprietor: Huawei Technologies Co., Ltd., Longgang District Shenzhen, Guangdong 518129 (CN)
(72) Inventor: XU, Xiaoying, Shenzhen, Guangdong 518129 (CN); ZENG, Qinghai, Shenzhen, Guangdong 518129 (CN); HUANG, Qufang, Shenzhen, Guangdong 518129 (CN); YOU, Chunhua, Shenzhen, Guangdong 518129 (CN)
(74) Representative: Pfenning, Meinig & Partner mbB
(86) International application number: PCT/CN2019/107342
(87) International publication number: WO 2021/056151

(56) References cited:
- EP-A1- 2 442 473
- WO-A1-2016/176841
- WO-A1-2018/028497
- CN-A- 101 365 150
- CN-A- 101 820 601
- CN-A- 108 540 272
- US-A1- 2019 090 123

## Description

### TECHNICAL FIELD

This application relates to the field of wireless communications technologies, and in particular, to a multicast transmission control technology.

### BACKGROUND

A wireless communications system includes a core network side device, at least one access network side device managed by the core network side device, and a terminal side device served by the at least one access network side device. A path from the core network side device to the access network side device to the terminal side device is referred to as a downlink. Data transmitted on a downlink path is referred to as downlink data. The core network side device may control the at least one access network side device to send a multicast service, such as a multimedia broadcast multicast service (multimedia broadcast multicast service, MBMS), to at least one terminal side device in a multicast manner and/or a unicast manner. The multicast manner mainly includes two manners: a multicast broadcast single frequency network (multicast broadcast single frequency network, MBSFN) manner and a single cell point to multipoint (single cell point to multipoint, SC-PTM) manner. In the MBSFN manner, timing of cells of a plurality of access network side devices in a same MBSFN area is strictly synchronized and same multicast services are sent at a same time, so as to implement signal combination gains of the plurality of cells. In the SC-PTM manner, timing synchronization of a plurality of cells is not required and same multicast services are not required to be sent at a same time. In either manner, because a network environment is complex and variable, the terminal side device may fail to receive the multicast service.

WO 2018/028497 describes a transmission method for a multicast service. The method comprises: a network element of an access network scheduling, at a wireless interface, the transmission of a multimedia broadcast multicast service (MBMS) data packet carried by a single cell-multicast traffic channel (SC-MTCH) for N times, N being an integer greater than or equal to 2.

US 2019/090123 describes a control plane based small data service.

CN 108540272 describes an information transmission method and device. The method comprises the following steps: decoding and analyzing first multicast service sent by a base station, and determining whether the first multicast service is successfully received according to an analysis result; if determining a fact that the receiving is successful, sending an acknowledgment receiving feedback message to the base station or not performing any feedback, thereby enabling the base station to not retransmit the first multicast service.

### SUMMARY

Embodiments of this application disclose a multicast transmission control method and a related device, so that a network can obtain a feedback from a terminal side device on a received multicast service, thereby facilitating network optimization of multicast service transmission. The scope of the present invention is defined by the appended claims.

The invention is set out in the appended set of claims. A first aspect of the embodiments of this application provides a multicast transmission control method, including the following content: A terminal side device receives a multicast service; and the terminal side device sends feedback information for the multicast service to an access network side device, where the feedback information indicates that receiving of the multicast service succeeds or receiving of the multicast service fails. The receiving, by the terminal side device, the multicast service sent by the access network side device comprises receiving, by the terminal side device, the multicast service sent in the unicast manner and the multicast service sent in the multicast manner.

According to the multicast transmission control method provided in the first aspect, a network can learn a feedback from the terminal side device on the received multicast service, thereby facilitating network optimization of multicast service transmission.

In a first possible implementation of the first aspect, when the terminal side device fails to receive the multicast service, the feedback information includes at least one piece of the following information: a failure event of receiving of the multicast service, a quantity of data packets failing to be received in the multicast service, an identifier of the multicast service, an identifier of a protocol data unit PDU session session to which the multicast service belongs, and a multicast manner and/or a unicast manner used to receive the multicast service.

According to the technical solution provided in the first possible implementation, the access network side device can clearly learn content of the feedback information, so that the access network side device can optimize multicast service transmission based on the specific feedback information.

In a second possible implementation of the first aspect, when one of the following failure events occurs, the feedback information indicates that receiving of the multicast service fails:

At least one data packet of the multicast service fails to be received within a first time;
a first quantity of data packets of the multicast service that fail to be received reaches a first threshold; and
a first quantity of data packets of the multicast service that fail to be received within the first time reaches a second threshold.

According to the technical solution provided in the second possible implementation, the terminal side device and the access network side device can clearly learn an event of the multicast service failure.

In a third possible implementation of the first aspect, the method further includes:
The terminal side device receives first configuration information sent by the access network side device, where the first configuration information indicates at least one of the following: the identifier of the multicast service, the identifier of the PDU session to which the multicast service belongs, and the failure event of receiving of the multicast service by the terminal side device.

According to the technical solution provided in the third possible implementation, the terminal side device may receive the multicast service under control of the access network side device, and determine that the multicast service fails.

In a fourth possible implementation of the first aspect, the sending, by the terminal side device, feedback information for the multicast service to an access network side device includes:
The terminal side device sends the feedback information for the multicast service to the access network side device by using a random access process and using a random access resource specific to the multicast service.

The technical solution provided in the fourth possible implementation explicitly indicates a random access resource that is used to send the feedback information and is specific to the multicast service.

[DELETED]

[DELETED]

In a sixth possible implementation of the first aspect, the receiving, by the terminal side device, the multicast service sent in the unicast manner and the multicast service sent in the multicast manner includes:
The terminal side device receives, at a PDCP layer by using a same PDCP entity, a same PDCP PDU of the multicast service separately sent in the unicast manner and the multicast manner; and/or
the terminal side device receives, at an RLC layer by using a same RLC entity, a same RLC PDU of the multicast service separately sent in the unicast manner and the multicast manner.

The technical solution provided in the sixth possible implementation explicitly indicates how the terminal side device implements receiving of the multicast service inside the terminal side device.

In a seventh possible implementation of the first aspect, the receiving, by the terminal side device, the multicast service sent in the unicast manner and the multicast service sent in the multicast manner includes:
The terminal side device receives, at a PDCP layer by using different PDCP entities respectively, a PDCP PDU sent in the unicast manner and a PDCP PDU sent in the multicast manner; and/or
the terminal side device receives, at an RLC layer by using different RLC entities respectively, an RLC PDU sent in the unicast manner and an RLC PDU sent in the multicast manner.

The technical solution provided in the seventh possible implementation explicitly indicates how the terminal side device implements receiving of the multicast service inside the terminal side device.

In an eighth possible implementation of the first aspect, the method further includes: The terminal side device receives indication information sent by the access network side device, where the indication information indicates a receiving manner used for the multicast service, and the receiving manner is only the unicast manner, only the multicast manner, or the unicast manner and the multicast manner.

The technical solution provided in the eighth possible implementation explicitly indicates that the terminal side device receives, under control of the access network side device, the multicast service in the receiving manner indicated by the access network side device.

In a ninth possible implementation of the first aspect, the indication information includes a start sequence number of the PDCP PDU or RLC PDU in the unicast manner and/or a start sequence number of the PDCP PDU or RLC PDU in the multicast manner.

The technical solution provided in the ninth possible implementation explicitly indicates that the terminal side device receives, under control of the access network side device, the multicast service based on the sequence number indicated by the access network side device.

In a tenth possible implementation of the first aspect, the unicast manner and the multicast manner are respectively corresponding to different GTP tunnels between a CU part and a DU part of the access network side device.

The technical solution provided in the tenth possible implementation explicitly indicates how the access network side device establishes GTP tunnels for the unicast manner and the multicast manner in the CU-DU architecture.

A second aspect of the embodiments of this application provides a multicast transmission control method, including the following content:
An access network side device sends a multicast service to a terminal side device; and the access network side device receives feedback information that is for the multicast service and sent by the terminal side device, where the feedback information indicates that the terminal side device successfully receives the multicast service or fails to receive the multicast service. The sending, by the access network side device, a multicast service to a terminal side device includes sending, by the access network side device, the multicast service to the terminal side device in the unicast manner and sending the multicast service to the terminal side device in the multicast manner.

According to the multicast transmission control method provided in the second aspect, a network can learn a feedback from the terminal side device on the received multicast service, thereby facilitating network optimization of multicast service transmission.

In a first possible implementation of the second aspect, when the terminal side device fails to receive the multicast service, the feedback information includes at least one piece of the following information: a failure event of receiving of the multicast service, a quantity of data packets failing to be received in the multicast service, an identifier of the multicast service, an identifier of a protocol data unit PDU session (session) to which the multicast service belongs, and a multicast manner and/or a unicast manner used to receive the multicast service.

According to the technical solution provided in the first possible implementation, the access network side device can clearly learn content of the feedback information, so that the access network side device can optimize multicast service transmission based on the specific feedback information.

In a second possible implementation of the second aspect, when one of the following failure events occurs, the feedback information indicates that receiving of the multicast service fails:
At least one data packet of the multicast service fails to be received within a first time;
a first quantity of data packets of the multicast service that fail to be received reaches a first threshold; and
a first quantity of data packets of the multicast service that fail to be received within the first time reaches a second threshold.

According to the technical solution provided in the second possible implementation, the terminal side device and the access network side device can clearly learn an event of the multicast service failure.

The method further includes:
The access network side device sends first configuration information to the terminal side device, where the first configuration information indicates at least one of the following:
the identifier of the multicast service, the identifier of the PDU session to which the multicast service belongs, and the failure event of receiving of the multicast service.

According to the technical solution provided in the third possible implementation, the terminal side device may receive the multicast service under control of the access network side device, and determine that the multicast service fails.

In a fourth possible implementation of the second aspect, the receiving, by the access network side device, feedback information that is for the multicast service and sent by the terminal side device includes:
The access network side device receives, on a random access resource specific to the multicast service, the feedback information that is for the multicast service and sent by the terminal side device.

The technical solution provided in the fourth possible implementation explicitly indicates a random access resource that is used to send the feedback information and is specific to the multicast service.

[DELETED]

[DELETED].

In a sixth possible implementation of the second aspect, the sending, by the access network side device, the multicast service to the terminal side device in the unicast manner and sending the multicast service to the terminal side device in the multicast manner includes:
The access network side device separately sends, at a PDCP layer by using a same PDCP entity, a same PDCP PDU of the multicast service to the terminal side device in the unicast manner and the multicast manner; and/or
the access network side device separately sends, at an RLC layer by using a same RLC entity, a same RLC PDU of the multicast service to the terminal side device in the unicast manner and the multicast manner.

The technical solution provided in the sixth possible implementation explicitly indicates how the terminal side device implements receiving of the multicast service inside the terminal side device.

In a seventh possible implementation of the second aspect, the sending, by the access network side device, the multicast service in a unicast manner and sending the multicast service in a multicast manner includes:
The access network side device sends, at a PDCP layer by using different PDCP entities respectively, a PDCP PDU in the unicast manner and a PDCP PDU in the multicast manner; and/or
the access network side device sends, at an RLC layer by using different RLC entities respectively, an RLC PDU in the unicast manner and an RLC PDU in the multicast manner.

The technical solution provided in the seventh possible implementation explicitly indicates how the terminal side device implements receiving of the multicast service inside the terminal side device.

In an eighth possible implementation of the second aspect, the method further includes:
The access network side device sends indication information to the terminal side device, where the indication information indicates a receiving manner used for the multicast service, and the receiving manner is only the unicast manner, only the multicast manner, or the unicast manner and the multicast manner.

The technical solution provided in the eighth possible implementation explicitly indicates that the terminal side device receives, under control of the access network side device, the multicast service in the receiving manner indicated by the access network side device.

In a ninth possible implementation of the second aspect, the indication information includes a start sequence number of the PDCP PDU or RLC PDU in the unicast manner and/or a start sequence number of the PDCP PDU or RLC PDU in the multicast manner.

The technical solution provided in the ninth possible implementation explicitly indicates that the terminal side device receives, under control of the access network side device, the multicast service based on the sequence number indicated by the access network side device.

In a tenth possible implementation of the second aspect, the unicast manner and the multicast manner are respectively corresponding to different GTP tunnels between a CU part and a DU part of the access network side device. The technical solution provided in the tenth possible implementation explicitly indicates how the access network side device establishes GTP tunnels for the unicast manner and the multicast manner in the CU-DU architecture.

A third aspect of the embodiments of this application provides a communications device, including a processing unit and a transceiver unit. In a specific implementation, the processing unit may be a processor, and the transceiver unit may be an input/output interface. The processing unit is configured to perform actions such as determining and processing of the terminal side device in the first aspect; and the transceiver unit is configured to perform actions such as receiving and sending of the terminal side device in the first aspect. The communications device has beneficial effects of the first aspect and the possible implementations of the first aspect. Details are not described herein again.

A fourth aspect of the embodiments of this application provides a communications device, including a processing unit and a transceiver unit. In a specific implementation, the processing unit may be a processor, and the transceiver unit may be an input/output interface. The processing unit is configured to perform actions such as determining and processing of the access network side device in the second aspect; and the transceiver unit is configured to perform actions such as receiving and sending of the access network side device in the second aspect. The communications device has beneficial effects of the second aspect and the possible implementations of the second aspect. Details are not described herein again.

A fifth aspect of the embodiments of this application provides a communications device, including a memory storing a computer program and a processor. The computer program is invoked by the processor, to enable the communications device to perform the method of the terminal side device according to the first aspect and the possible implementations of the first aspect, or the method of the access network side device according to the second aspect and the possible implementations of the second aspect.

A sixth aspect of the embodiments of this application provides a computer-readable storage medium, including a memory storing a computer program. When the computer program is executed, the method of the terminal side device according to the first aspect and the possible implementations of the first aspect, or the method of the access network side device according to any one of the second aspect and the possible implementations of the second aspect is implemented.

### BRIEF DESCRIPTION OF DRAWINGS

FIG. 1A and FIG. 1B are schematic diagrams of interaction of multicast service transmission in a wireless communications system according to an embodiment of this application;
FIG. 2 is a schematic diagram of interaction of a multicast transmission control method according to an embodiment of this application;
FIG. 3 to FIG. 5 are schematic diagrams of structures of PDCP messages;
FIG. 6 to FIG. 8 are schematic diagrams of structures of MAC messages according to embodiments of this application;
FIG. 9 to FIG. 10 are schematic diagrams of transmitting feedback information by using PUCCH resources according to embodiments of this application;
FIG. 11 is a schematic flowchart of receiving a multicast service according to an embodiment of this application;
FIG. 12 to FIG. 14 are schematic diagrams of structures of multicast radio bearers
FIG. 15 is a schematic flowchart of switching a multicast service receiving manner according to an embodiment of this application;

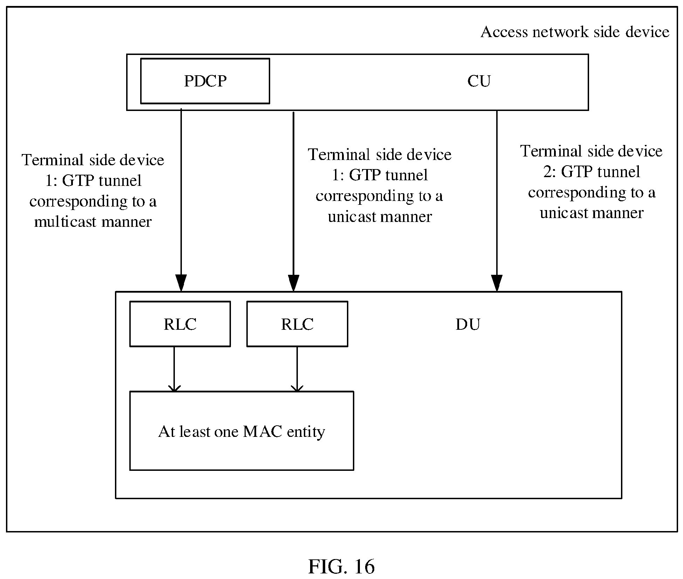

FIG. 16 to FIG. 17 are schematic diagrams of structures of access network side devices in a CU-DU architecture; and
FIG. 18 and FIG. 19 are schematic diagrams of structures of communications devices according to embodiments of this application.

### DESCRIPTION OF EMBODIMENTS

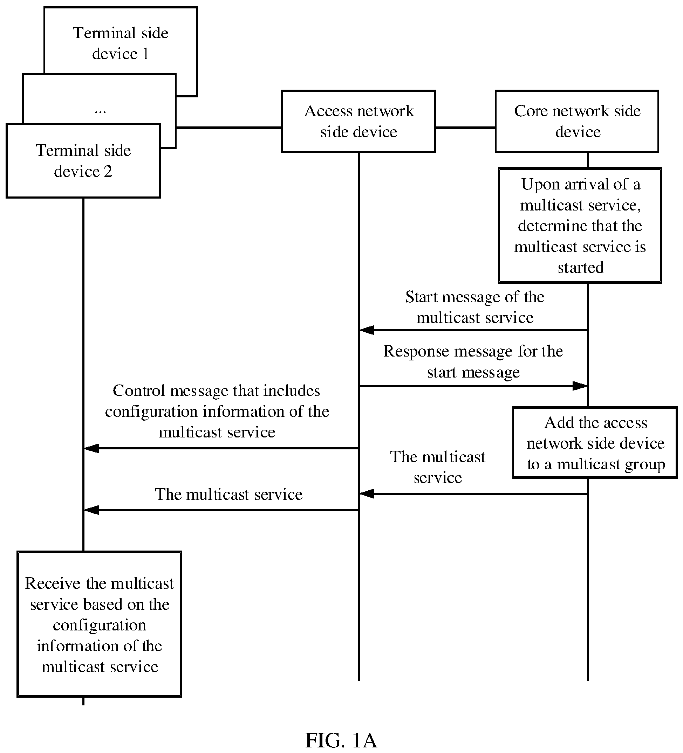

A wireless communications system shown in FIG. 1A includes a terminal side device, an access network side device, and a core network side device. The wireless communications system may be a long term evolution (long term evolution, LTE) system or a new radio (new radio) system (also referred to as a 5G system).

The terminal side device may be a standalone terminal or a chip system in the terminal. The terminal is also referred to as user equipment (user equipment, UE), a mobile station (mobile station) or a subscriber station (subscriber station, SS), and includes a mobile phone, a handheld internet of things device, a wearable device (wearable devices), an internet of vehicles terminal, or the like.

The access network side device may be a standalone radio access device or a chip system in the radio access device. The radio access device may be a base station, a wireless local area network access point, a host node in an integrated access backhaul (integrated access backhaul, IAB) system, a child node of the host node, or the like. The base station may be classified into two types: a macro base station (macro base station) and a small base station. The small base station is further classified into a micro base station (micro base station), a pico base station (pico base station), and the like. The wireless local area network access point may be a router, a switch, or the like. The wireless local area network access point may provide wireless fidelity (wireless fidelity, Wi-Fi) signal coverage. A form of the radio access device may be a road site unit (road site unit, RSU), a low-altitude artificial satellite, or the like.

The access network side device may be an architecture of a centralized unit (central unit, CU) and a distributed unit (distributed unit, DU) according to a protocol layer. A control plane connection and a user plane connection are included between the CU and the DU, and the user plane connection is also referred to as a user plane tunnel (user plane (UP) tunnel). One user plane tunnel is determined by one uplink tunnel endpoint on the CU and one downlink tunnel endpoint on the DU. The CU is configured to implement a function of a radio resource control (radio resource control, RRC) layer, and the DU is configured to implement a function of a physical (physical, PHY) layer, a function of a media access control (media access control, MAC) layer, and a function of a radio link control (radio link control, RLC) layer. Optionally, the CU is further configured to implement a function of a Packet Data Convergence Protocol (Packet Data Convergence Protocol, PDCP) layer and a function of a Service Data Adaptation Protocol (Service Data Adaptation Protocol, SDAP) layer.

The terminal side device in the wireless communications system has three statuses: an RRC connected (RRC_Connected) state, an RRC inactive (RRC inactive) state, and an RRC idle (RRC idle) state. The RRC connected state is a state in which connection establishment is completed between the terminal side device and the access network side device and between the terminal side device and the core network side device through a process such as RRC connection establishment, RRC connection re-establishment, and RRC connection recovery. The RRC inactive state is a state in which the terminal side device disconnects from the access network side device, but maintains a connection to the core network side device, and the access network side device stores a context (for example, an identifier of the terminal side device) of the terminal side device. The RRC idle state is a state in which the terminal side device disconnects from the access network side device and the core network side device, and the access network side device releases a context of the terminal side device.

Data is transmitted between the terminal side device and the access network side device through at least one established radio bearer (radio bearer, RB). The data may include signaling data or service data. A radio bearer mainly used for signaling data transmission is a signaling radio bearer (signaling radio bearer, SRB), and a radio bearer mainly used for service data transmission is a data radio bearer (data radio bearer, DRB). The service data includes enhanced mobile broadband (enhanced mobile broadband, eMBB) data, massive machine type communication (massive machine type communication, mMTC) data, ultra-reliable low-latency communication (ultra-reliable low-latency communication, URLLC) data, and the like.

In each embodiment of this application, the data is multicast service data, and the at least one radio bearer is at least one multicast radio bearer.

When a multicast service arrives at a core network side device from a service content provider (for example, various Internet servers), the core network side device sends a start message of the multicast service to an access network side device, where the start message indicates an internet protocol (internet protocol, IP) address of the multicast service and a cell for sending the multicast service. The access network side device sends a response message for the start message to the core network side device, and sends, to the terminal side device on a multicast control channel (multicast control channel, MCCH), a control message (such as an MCCH message) that includes configuration information of the multicast service. The core network side device adds the access network side device to a multicast group, and sends the multicast service to the access network side device. The access network side device sends the multicast service to the terminal side device in the cell, and the terminal side device receives the multicast service on a multicast traffic channel (multicast traffic channel, MTCH) based on the configuration information of the multicast service. To enable the terminal side device to obtain the MCCH message, the access network side device further sends MCCH configuration information to the terminal side device. The MCCH configuration information includes an MCCH modification periodicity, an MCCH repetition periodicity, an MCCH start location, and the like. The terminal side device may determine, based on the MCCH configuration information, a candidate resource location of a physical downlink control channel (physical downlink control channel, PDCCH) associated with the MCCH message, and monitor the PDCCH at the candidate resource location, so as to determine a physical downlink shared channel (physical downlink shared channel, PDSCH) indicated by the PDCCH. The PDSCH carries the MCCH message. It should be noted that, in the LTE system, one cell corresponds to only one carrier. Therefore, in the LTE system, concepts of a cell and a carrier are often interchanged. In the NR system, one cell corresponds to at least one carrier.

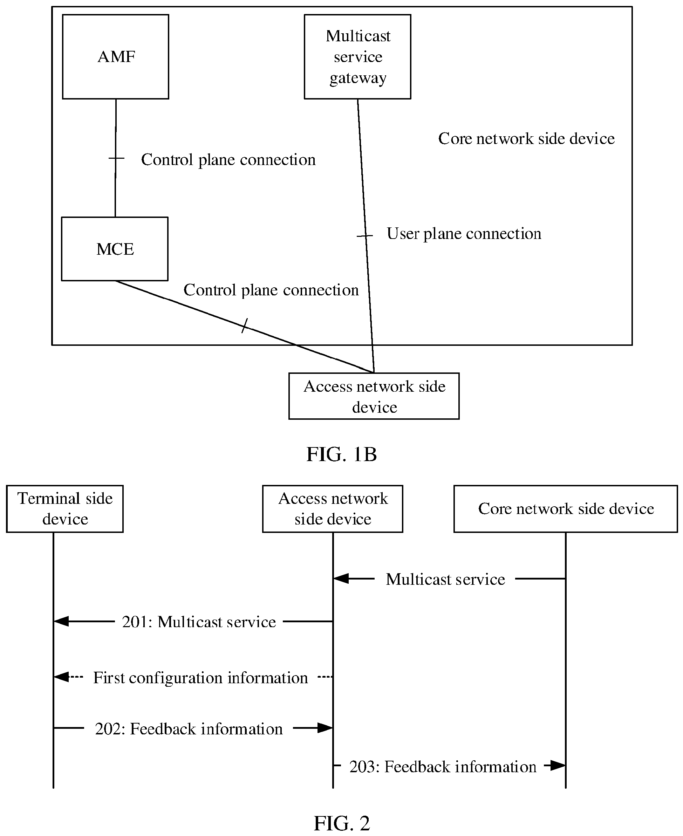

In a specific implementation, as shown in FIG. 1B, the start message of the multicast service that is sent by the core network side device to the access network side device and the response message that is for the start message and sent by the access network side device to the core network side device may be transmitted through control plane connections of an access and mobility management function (access and mobility management function, AMF) entity and a multi-cell/multicast coordination entity (multi-cell/multicast coordination entity, MCE) in the core network side device. As shown in FIG. 1B, the multicast service sent by the core network side device to the access network side device may be sent by a multicast service gateway in the core network side device to the access network side device through a user plane connection of the multicast service gateway.

However, the conventional technology only requires that an access network side device send a multicast service. However, a network environment is changeable, and the terminal side device may fail to receive the multicast service, or may successfully receive the multicast service. In particular, a case in which the multicast service fails to be received is not conducive to improving experience of the user equipment.

In view of the foregoing case, a first embodiment of this application provides a multicast transmission control method. A schematic diagram of system interaction shown in FIG. 2 includes the following content.

201: An access network side device sends a multicast service to a terminal side device. Correspondingly, the terminal side device receives the multicast service.

A manner used by the access network side to send the multicast service is sending the multicast service in only a unicast manner, in only a multicast manner, or in the unicast manner and the multicast manner. Optionally, the access network side device notifies the terminal side device of a receiving manner used for the multicast service, and the terminal side device receives the multicast service based on the receiving manner.

The terminal side device may receive, by using an identifier corresponding to the unicast manner, the multicast service sent in the unicast manner. The identifier corresponding to the unicast manner may be an identifier dedicated to the terminal side device, for example, a cell-radio network temporary identifier (cell-radio network temporary identifier, C-RNTI).

The terminal side device may receive, by using an identifier corresponding to the multicast manner, the multicast service sent in the multicast manner. The identifier corresponding to the multicast manner may be an identifier dedicated to a multicast group to which the terminal side device belongs, for example, a group-radio network temporary identifier (group-radio network temporary identifier, G-RNTI).

For a multicast service transmitted in the unicast manner, the terminal side device receives, by using the identifier corresponding to the unicast manner, a PDCCH scrambled by using the identifier corresponding to the unicast manner. For a multicast service transmitted in the multicast manner, the terminal side device receives, by using the identifier corresponding to the multicast manner, a PDCCH scrambled by using the identifier corresponding to the multicast manner. The terminal side device obtains, on a time-frequency resource indicated by the PDCCH, an MCCH message mapped to a physical downlink shared channel (physical downlink shared channel, PDSCH), and then determines, on a time-frequency resource indicated by the MCCH message, an MTCH that carries the multicast service, so as to obtain the multicast service.

202: The terminal side device sends feedback information for the multicast service to the access network side device, where the feedback information indicates that receiving of the multicast service succeeds or receiving of the multicast service fails.

203: The access network side device sends the feedback information to a core network side device.

When the multicast service is successfully received, the terminal side device may periodically send, to the access network side device, a feedback that the multicast service is successfully received, or may not send the feedback information, to enable the access network side device to consider by default that the terminal side device successfully receives the multicast service.

When the multicast service fails to be received, the terminal side device may periodically send, to the access network side device, a feedback that the multicast service fails to be received, or may not send the feedback information, to enable the access network side device to consider by default that the terminal side device fails to receive the multicast service.

When the multicast service fails to be received (for example, the multicast service is received incorrectly or not received), the feedback information includes at least one piece of the following information: a failure event of receiving of the multicast service, a quantity of data packets failing to be received in the multicast service, an identifier of the multicast service (for example, a temporary mobile group identity (temporary mobile group identity, TMGI)), an identifier of a protocol data unit (protocol data unit, PDU) session (session) to which the multicast service belongs, a multicast manner and/or a unicast manner used to receive the multicast service, and a request for the unicast manner when the multicast service fails to be received in the multicast manner (an embodiment not covered by the claimed invention, but an examples suitable for understanding the invention).

Optionally, the failure event of receiving of the multicast service may be one of the following:
(1) At least one data packet of the multicast service fails to be received within a first time;
(2) a first quantity of data packets of the multicast service that fail to be received reaches a first threshold; and
(3) a first quantity of data packets of the multicast service that fail to be received within the first time reaches a second threshold.

In the failure event (1), when at least one data packet in the multicast service is received incorrectly or not received within the first time (that is, before the first time expires), the terminal side device determines that receiving of the multicast service fails. Optionally, a quantity that is of the at least one data packet and used to determine that the multicast service fails to be received is predefined in a protocol or notified by the access network side to the terminal side device.

In the failure event (1), when at least H data packets of the multicast service are received incorrectly or not received, the terminal side device starts a first timer, before the first timer expires, if at least L data packets of the multicast service are successfully received, the first timer is reset. In this case, the terminal side device determines that receiving of the multicast service does not fail. When at least H data packets of the multicast service are received incorrectly or not received, the terminal side device starts a first timer, and if at least L data packets of the multicast service are received incorrectly or not received at the moment when the first timer expires, the terminal side device determines that receiving of the multicast service fails. Values of H and L are predefined in a protocol or notified by the access network side device to the terminal side device.

In the failure event (2), when the first quantity of data packets of the multicast service that are received incorrectly or not received reaches the first threshold, the terminal side device determines that receiving of the multicast service fails.

In the failure event (3), when the second quantity reaches the second threshold before the first time expires, the terminal side device determines that the multicast service fails.

Duration of the first time may be predefined in a protocol, or may be notified by the access network side device to the terminal side device.

The first threshold may be predefined in a protocol, or may be notified by the access network side device to the terminal side device. The second threshold may be predefined in a protocol, or may be notified by the access network side device to the terminal side device. The first threshold and the second threshold are a same threshold or different thresholds.

Optionally, the quantity of data packets that fail to be received in the multicast service may be a quantity of PDCP data packets that fail to be received, or may be a quantity of RLC data packets that fail to be received, or may be a quantity of MAC data packets that fail to be received, or may be a sum of at least two of the quantity of PDCP data packets that fail to be received, the quantity of RLC data packets that fail to be received, and the quantity of MAC data packets that fail to be received.

In a possible implementation, before the terminal side device sends the feedback information, the terminal side device receives first configuration information sent by the access network side device. The first configuration information indicates at least one of the following: the identifier of the multicast service, the identifier of the PDU session to which the multicast service belongs, the failure event of receiving of the multicast service, and periodical feedback about whether receiving of the multicast service fails or succeeds. The multicast service may belong to one or more PDU sessions. For example, if all data packets of the multicast service are corresponding to at least one quality of service (quality of service, QoS) flow that belongs to a same PDU session, the multicast service belongs to the same PDU session. If a plurality of data packets included in the multicast service are corresponding to a plurality of QoS flows that belong to a plurality of PDU sessions, the multicast service belongs to the plurality of PDU sessions.

The access network side device may use the first configuration information to further include indication information, to indicate the terminal side device to feed back a receiving status of the multicast service. The indication information may specifically indicate whether only a receive failure is fed back, only a receive success is fed back, or both the receive success and the receive failure are fed back. Optionally, a value of the indication information is a Boolean value: When the value of the indication information is "TRUE", the indication information indicates to feed back the receiving status of the multicast service; or when the value of the indication information is "FALSE" or the indication information does not exist, the terminal side device determines not to feed back the receiving status of the multicast service. Optionally, a value of the indication information is an enumerated value: When the enumerated value of the indication information is {report feedback information}, the terminal side device feeds back a receiving status of the multicast service; or when the enumerated value of the indication information is {do not report feedback information} or does not exist, the terminal side device determines not to feed back the receiving status of the multicast service.

The first configuration information may be carried in an RRC message (for example, an RRC reconfiguration message), a PDCP message, or a MAC message that is sent by the access network side device to the terminal side device.

The access network side device may use a common RRC message to carry the first configuration information and send the common RRC message to a plurality of terminal side devices, so as to configure the plurality of terminal side devices to send feedbacks for the multicast service. The common RRC message may be a master information block (master information block, MIB) or a system information block (system information block, SIB).

The access network side device may use an RRC message dedicated to a specific terminal side device to carry the first configuration information, and send the RRC message to the terminal side device, so as to configure the terminal side device to send a feedback for the multicast service.

The access network side device may use a common PDCP message (for example, a common PDCP control PDU) to carry the first configuration information, and send the common PDCP message to a plurality of terminal side devices, so as to configure the plurality of terminal side devices to send feedbacks for the multicast service. The access network side device may use a PDCP message dedicated to a specific terminal side device to carry the first configuration information, and send the PDCP message to the terminal side device, so as to configure the terminal side device to send a feedback for the multicast service.

The access network side device may use a common MAC message (for example, a MAC control element) to carry the first configuration information and send the common MAC message to a plurality of terminal side devices, so as to configure the plurality of terminal side devices to send feedbacks for the multicast service. The access network side device may use a MAC message dedicated to a specific terminal side device to carry the first configuration information, and send the MAC message to the terminal side device, so as to configure the terminal side device to send a feedback for the multicast service.

The terminal side device may perform, based on the first configuration information, an operation indicated by the first configuration information. For example, if the first configuration information indicates the identifier of the multicast service, the terminal side device receives the multicast service and sends the feedback information. If the first configuration information indicates the identifier of the PDU session to which the multicast service belongs, the terminal side device receives, at the PDU session, the multicast service and sends the feedback information. If the first configuration information indicates the failure event of receiving of the multicast service, the terminal side device sends the feedback information when the failure event occurs. If the first configuration information indicates periodical feedback about whether receiving of the multicast service fails or succeeds, the terminal side device periodically sends the feedback information.

202: The terminal side device may send the feedback information on the following resources.
(1) Sending the feedback information by using a PUSCH resource

(1-1) Send the feedback information by using a physical uplink shared channel (physical uplink shared channel, PUSCH) resource obtained in a four-step random access process or a two-step random access process.

Before sending the feedback information, the terminal side device may obtain the PUSCH resource in the four-step random access process or the two-step random access process.

In the four-step random access process, the terminal side device sends a random access preamble (preamble) to the access network side device on a random access resource, and receives a random access response sent by the access network side device in response to the preamble, where the random access response includes the PUSCH resource, and the terminal side device sends the feedback information to the access network side device by using the PUSCH resource.

In the two-step random access process, the access network side device preconfigures (for example, by using an RRC message) a random access resource and a PUSCH resource corresponding to a random access preamble for the terminal side device. The terminal side device sends the random access preamble on the random access resource, and sends the feedback information on the PUSCH resource corresponding to the random access preamble.

(1-2) Send the feedback information by using a PUSCH resource scheduled by using a PDCCH.

The PDCCH may be specific to a terminal side device, or may be specific to a cell in which the terminal side device is located, so that the terminal side device can blindly detect the PDCCH, so as to obtain the PUSCH resource scheduled by using the PDCCH.

(1-3) Send the feedback information by using a preconfigured PUSCH resource.

The preconfigured PUSCH resource may be a PUSCH resource semi-statically configured by using an RRC message or a grant-free PUSCH resource. For the terminal side device, this PUSCH resource has a feature that the PUSCH resource does not need to be scheduled by using a PDCCH, and can be used a plurality of times after being configured once.

The terminal side device may send the feedback information by using at least one PUSCH resource in (1-1), (1-2), or (1-3), so as to implement at least one sending of the feedback information. The terminal side device may send the feedback information on the at least one PUSCH resource by using an RRC message, a PDCP message, or a MAC message.

(1-a) Send the feedback information by using the RRC message.

Optionally, the RRC message includes an identifier of at least one multicast service, so as to explicitly indicate a specific multicast service or specific multicast services whose receiving statuses are fed back by the terminal side device. In an implementation, the RRC message includes a plurality of bits corresponding to a plurality of multicast services received by the terminal side device in a same cell. A bit location of the i^{th} bit in the plurality of bits indicates a multicast service i in the plurality of multicast services, and a bit state of the i^{th} bit indicates whether receiving of the multicast service i succeeds or fails. For example, a bit state "0" indicates that receiving succeeds, and a bit state "1" indicates that receiving fails. Optionally, the plurality of bits are arranged in ascending or descending order based on identifiers of the plurality of multicast services.

(1-b) Send the feedback information by using the PDCP message.

Optionally, the PDCP message is a PDCP status report defined in the 3rd Generation Partnership Project (3GPP) standard. The PDCP status report includes a field indicating that at least one data packet of the multicast service fails to be received or is successfully received, and the at least one data packet is determined by using a super frame number and a PDCP sequence number (sequence number, SN). Refer to sections 6.2 and 6.3 of 3GPP 38.323.

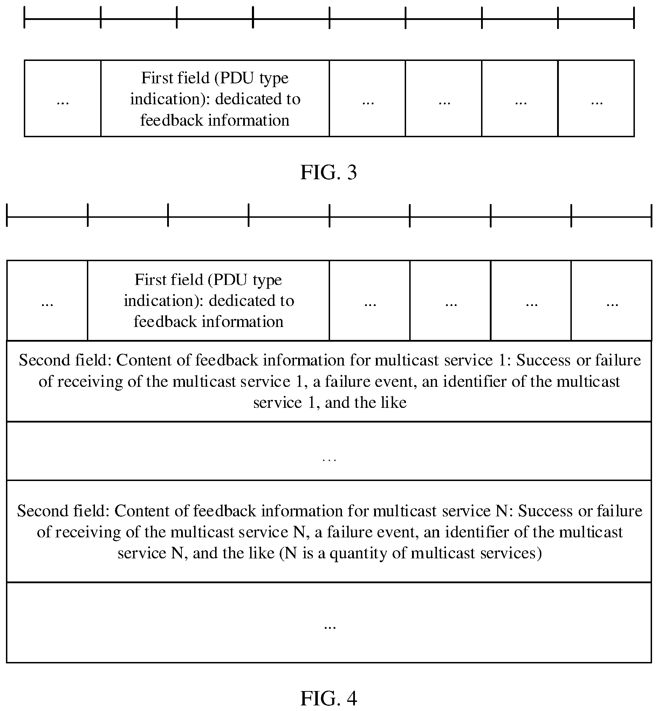

Optionally, the PDCP message is a control message dedicated to the feedback information. The PDCP message includes a first field dedicated to the feedback information, and the first field indicates that the PDCP message is dedicated to the feedback information, as shown in FIG. 3. If the access network side device receives a PDCP message that includes the first field, it may be determined, without considering another field of the PDCP message, that the terminal side device fails to receive the multicast service.

In an implementation, on the basis of FIG. 3, as shown in FIG. 4, the PDCP message further includes a second field, and the second field indicates content of the feedback information. For example, the second field indicates the failure event of receiving of the multicast service, the quantity of data packets that fail to be received in the multicast service, or the identifier of the multicast service. If the terminal side device receives a plurality of multicast services, the PDCP message may include content of feedback information of the plurality of multicast services that are respectively indicated by a plurality of second fields corresponding to the plurality of multicast services respectively.

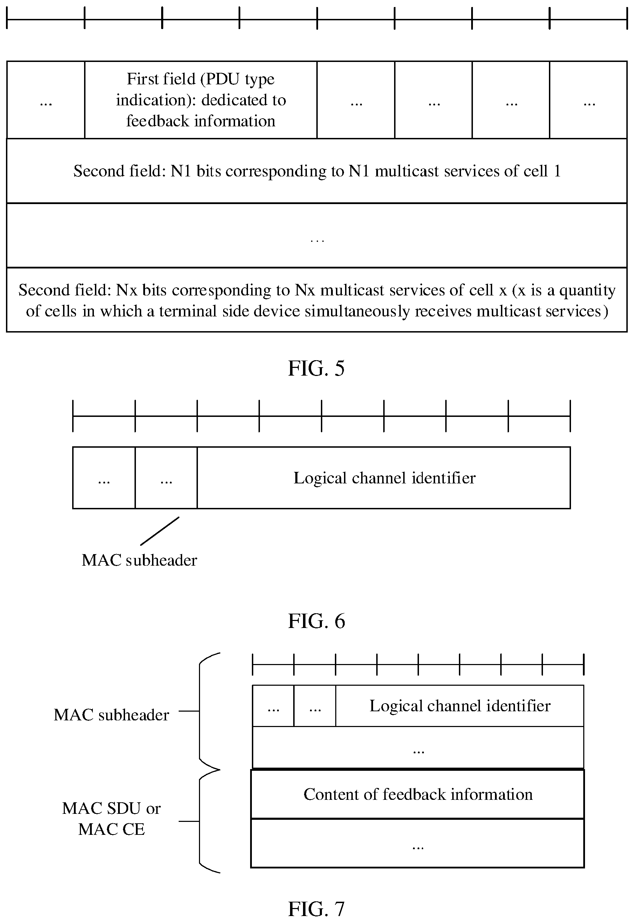

In another implementation, on the basis of FIG. 3, as shown in FIG. 5, the PDCP message further includes a second field, and the second field is a bitmap. The bitmap includes a plurality of bits corresponding to a plurality of multicast services received by the terminal side device in a same cell. A bit location of the i^{th} bit in the plurality of bits indicates a multicast service i in the plurality of multicast services, and a bit state of the i^{th} bit indicates whether receiving of the multicast service i succeeds or fails. For example, a bit state "1" indicates that receiving succeeds, and a bit state "0" indicates that receiving fails. Optionally, the plurality of bits are arranged in ascending or descending order based on identifiers of the plurality of multicast services. Optionally, if the terminal side device may simultaneously receive a plurality of multicast services of a plurality of cells, the PDCP message may include a plurality of second fields indicating that receiving of each multicast service of each cell succeeds or fails.

(1-c) Send the feedback information by using the MAC message.

Optionally, as shown in FIG. 6, the MAC message includes a MAC subheader, and does not include a MAC service data unit (service data unit, SDU) or a MAC control element (control element, CE) that are corresponding to the MAC subheader. The MAC subheader includes a logical channel identifier, and the logical channel identifier indicates that receiving of the multicast service fails or succeeds. After receiving the MAC message, if the access network side device determines that the MAC message does not include the MAC SDU or the MAC CE that is corresponding to the MAC subheader, the access network side device determines that the MAC message carries the feedback information, and further determines, based on the logical channel identifier in the MAC subheader, that receiving of the multicast service fails or succeeds.

Optionally, as shown in FIG. 7, the MAC message includes a MAC subheader, and further includes a MAC SDU and/or a MAC CE. The MAC subheader includes a logical channel identifier, and the logical channel identifier indicates that the MAC message is dedicated to the feedback information. The MAC SDU or the MAC CE indicates content of the feedback information, for example, the identifier of the multicast service, the quantity of data packets that fail to be received in the multicast service, and the like.

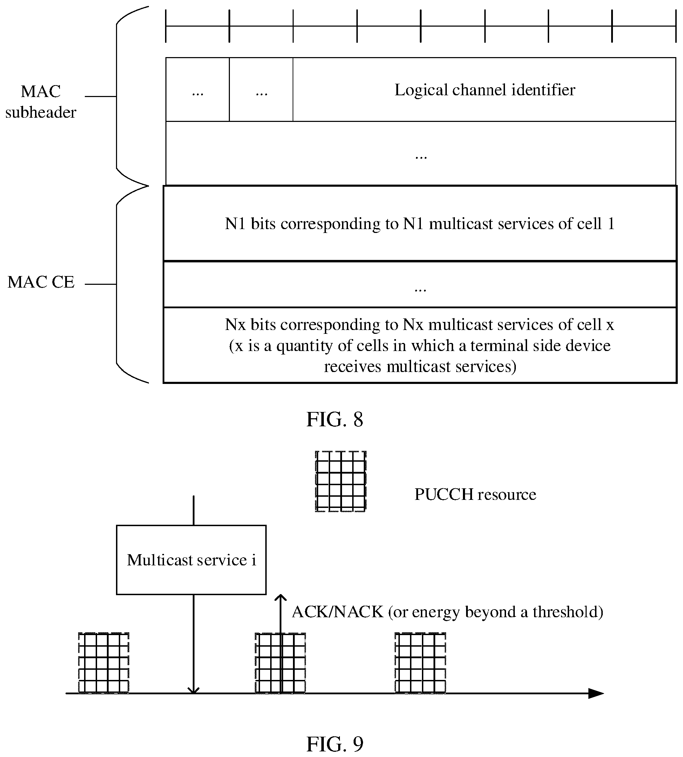

Optionally, as shown in FIG. 8, the MAC message includes a MAC subheader, and further includes a MAC CE. The MAC subheader includes a logical channel identifier, and the logical channel identifier indicates that the MAC message is dedicated to the feedback information. The MAC CE includes a bitmap, and the bitmap includes a plurality of bits corresponding to a plurality of multicast services received by the terminal side device in a same cell. A bit location of the i^{th} bit in the plurality of bits indicates a multicast service i in the plurality of multicast services, and a bit state of the i^{th} bit indicates whether receiving of the multicast service i succeeds or fails. For example, a bit state "1" indicates that receiving succeeds, and a bit state "0" indicates that receiving fails. Optionally, the plurality of bits are arranged in ascending or descending order based on identifiers of the plurality of multicast services. Optionally, if the terminal side device may simultaneously receive a plurality of multicast services of a plurality of cells, the MAC CE may include a plurality of bitmaps indicating that receiving of each multicast service of each cell succeeds or fails.

(2) Sending the feedback information by using a PUCCH resource

The PUCCH resource used to send the feedback information is a PUCCH resource that is associated with the multicast service and configured by the access network side device. An offset between a time domain location of the PUCCH resource for sending the feedback information and a time domain location for receiving the multicast service may be predefined in a protocol or configured by the access network side device. For example, the time domain location of the PUCCH resource for sending the feedback information is a next PUCCH resource closest to the time domain location for receiving the multicast service.

In an implementation, as shown in FIG. 9, when the multicast service is successfully received, the terminal side device indicates, on the PUCCH resource, that the multicast service is successfully received, for example, sends, on the PUCCH resource, 1-bit acknowledgement (ACK) information or dedicated sequence code indicating that the multicast service is successfully received. It should be noted that when the multicast service is successfully received, the terminal side device may not send any signal on the PUCCH resource, and in this case, the access network side device considers, by default, that the terminal side device receives the multicast service successfully. When the multicast service fails to be received, the terminal side device indicates, on the PUCCH resource, that the multicast service fails to be received, for example, sends, on the PUCCH resource, 1-bit negative acknowledgement (NACK) information or a dedicated sequence indicating that the multicast service fails to be received. Optionally, the PUCCH resource is dedicated to the multicast service, that is, the multicast service i in the plurality of multicast services is corresponding to a PUCCH resource i. The terminal side device may send feedback information for the multicast service i by using the PUCCH resource i. If the access network side device detects ACK/NACK or the foregoing dedicated sequence on the PUCCH resource i, the access network side device determines that the terminal side device fails or succeeds in receiving the multicast service i. The terminal side device may send, on the PUCCH resource i, a plurality of bits corresponding to a plurality of data packets of the multicast service i. A location of a bit p indicates a data packet p, and a bit state of the bit p indicates that receiving of the data packet p succeeds or fails. The sequence that is sent by the terminal side device on the PUCCH resource and indicates that receiving of the multicast service succeeds or fails may be generated based on a constant amplitude zero auto-correlation (constant amplitude zero aotu-correction, CAZAC) sequence. A root sequence index of the CAZAC sequence may be configured by the access network side device or pre-defined in a protocol. The CAZAC sequence may be a Zadoff-Chu (ZC) sequence. The access network side device may determine, based on the detected sequence, that receiving of the multicast service succeeds or fails. The access network side device may configure a sequence corresponding to all multicast services. After receiving of a multicast service fails or succeeds, the terminal side device sends the sequence. The access network side device may configure a multicast service i in the plurality of multicast services to correspond to a sequence i. When receiving of the multicast service i fails or succeeds, the terminal side device sends the sequence i to indicate that receiving of the multicast service i fails or succeeds.

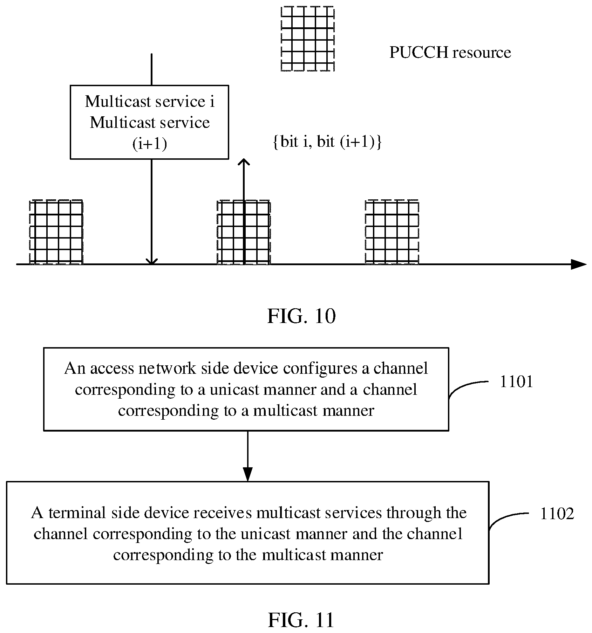

In another implementation, as shown in FIG. 10, the terminal side device may send, on a PUCCH resource, a plurality of bits corresponding to a plurality of multicast services received by the terminal side device in a same cell. A bit location of the i^{th} bit in the plurality of bits indicates a multicast service i in the plurality of multicast services, and a bit state of the i^{th} bit indicates whether receiving of the multicast service i succeeds or fails. For example, a bit state "1" indicates that receiving succeeds, and a bit state "0" indicates that receiving fails. Optionally, the plurality of bits are arranged in ascending or descending order based on identifiers of the plurality of multicast services.

(3) Sending the feedback information by using a dedicated sequence in random access

The dedicated sequence may be a random access preamble in a random access process. The dedicated sequence indicates that receiving of at least one multicast service fails or succeeds.

The access network side device may configure a dedicated sequence corresponding to all multicast services. After receiving of a multicast service fails or succeeds, the terminal side device sends the dedicated sequence.

The access network side device may configure a multicast service i in the plurality of multicast services to correspond to a dedicated sequence i. When receiving of the multicast service i fails or succeeds, the terminal side device sends the dedicated sequence i to indicate that receiving of the multicast service i fails or succeeds.

According to the technical solution provided in the first embodiment of this application, the terminal side device may send the feedback information for the multicast service to the access network side device, so that the access network side device can obtain a transmission status of the multicast service. This helps optimize transmission of the multicast service.

A second embodiment of this application provides a multicast transmission control method. As shown in FIG. 11, the method includes the following content. The second embodiment of this application relates to how a terminal side device receives a multicast service sent by an access network side device. The second embodiment may be used as further refined method steps of the first embodiment, or may be performed independent of the method of the first embodiment.

1101: An access network side device sends second configuration information to a terminal side device, where the second configuration information is used to configure a channel corresponding to a unicast manner and a channel corresponding to a multicast manner.

1102: The terminal side device receives, through the channel corresponding to the unicast manner and the channel corresponding to the multicast manner, a multicast service sent by the access network side device.

In 1101, the second configuration information may be carried in a system broadcast message, a NAS message, or an RRC message dedicated to the terminal side device. If the second configuration information is carried in the NAS message, the second configuration information is generated by a core network side device that establishes a NAS layer connection to the terminal side device, and is forwarded to the terminal side device by using the access network side device. The second configuration information may further include an identifier of the multicast service, and an identifier of a multicast group to which the terminal side device belongs, for example, a G-RNTI. When the second embodiment is combined with the first embodiment, the second configuration information and the first configuration information in the first embodiment may be carried in a same message.

Optionally, before 1101, the terminal side device notifies the access network side device of a capability of the terminal side device. The capability includes supporting receiving a multicast service through the channel corresponding to the unicast manner and the channel corresponding to the multicast manner.

In an implementation, the channel corresponding to the unicast manner and the channel corresponding to the multicast manner are logical channels corresponding to different RLC entities. Correspondingly, the second configuration information includes identifiers of the logical channels corresponding to the different RLC entities. The channel (unicast channel) corresponding to the unicast manner may be corresponding to the identifier (such as a TMGI) of the multicast service.

Optionally, the different RLC entities may be connected to a same PDCP entity, or the different RLC entities may be connected to different PDCP entities respectively. In this implementation, the terminal side device may receive, through the channel corresponding to the unicast manner by using an identifier (for example, a C-RNTI) corresponding to the unicast manner, a multicast service sent in the unicast manner, and may receive, through the channel (multicast channel) corresponding to the multicast manner by using an identifier (for example, a G-RNTI) corresponding to the multicast manner, a multicast service sent in the multicast manner. For example, the terminal side device obtains, based on the C-RNTI, a PDSCH scheduled by a PDCCH scrambled by using the C-RNTI, and further obtains a MAC message to which the PDSCH is mapped. In an implementation, the terminal side device obtains a logical channel identifier from the MAC message, and learns the multicast service based on a correspondence (for example, a one-to-one correspondence) between the logical channel identifier and the multicast service. In another implementation, the terminal side device learns the multicast service in the MAC message based on an indication (for example, the identifier of the multicast service) of the multicast service included in a subheader (subheader) or a payload (payload) in the MAC message. Similarly, the terminal side device obtains, based on the G-RNTI, a PDSCH scheduled by a PDCCH scrambled by using the G-RNTI, further obtains a MAC message to which the PDSCH is mapped, and learns the multicast service based on the MAC message. Optionally, the terminal side device may learn, based on a one-to-one correspondence between the G-RNTI and the multicast service, the multicast service sent by the access network side device, and then learn specific content of the multicast service based on the MAC message.

In another implementation, the channel corresponding to the unicast manner and the channel corresponding to the multicast manner are a same logical channel corresponding to a same RLC entity. In this case, the same RLC entity may not have a corresponding PDCP entity. In this implementation, the terminal side device may receive, through the same logical channel by using the identifier (for example, the C-RNTI) corresponding to the unicast manner, the multicast service sent in the unicast manner, and may receive, through the same logical channel by using the identifier (for example, the G-RNTI) corresponding to the multicast manner, the multicast service sent in the multicast manner. A specific receiving method is similar to that in the description of the previous paragraph.

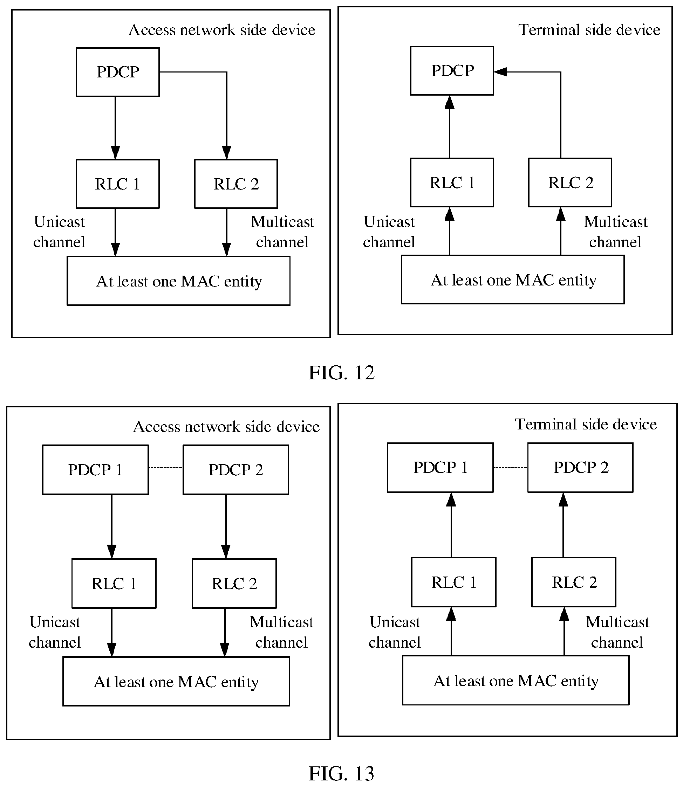

In 1102, the terminal side device may establish a multicast radio bearer based on the received second configuration information, and receive, on the multicast radio bearer, the multicast service sent in the unicast manner and the multicast service sent in the multicast manner. The multicast radio bearer includes the following different implementations:
(1) As shown in FIG. 12 (an embodiment not covered by the claimed invention, but an examples suitable for understanding the invention), the multicast radio bearer used by the terminal side device to receive the multicast service sent in the unicast manner and the multicast radio bearer used to receive the multicast service sent in the multicast manner are the same. The multicast radio bearer includes one PDCP entity of the terminal side device and one peer PDCP entity of the access network side device. The PDCP entity of the terminal side device is connected to at least two RLC entities of the terminal side device, the PDCP entity of the access network side device is connected to at least two RLC entities of the access network side device, and the at least two RLC entities of the terminal side device and the at least two RLC entities of the access network side device are respectively peer to each other. In this case, at least two repeated PDCP data packets generated by the PDCP entity of the access side device have a same PDCP SN, and are respectively sent to the terminal side device by using the at least two RLC entities of the access network side device. The terminal side device processes one PDCP data packet in a plurality of repeated PDCP data packets of the same PDCP SN that are received from the at least two RLC entities of the terminal side device, and discards the remaining repeated PDCP data packets. In this case, redundancy processing of the same data packets sent in the unicast manner and the multicast manner may be avoided, and a resource waste is avoided. Optionally, the terminal side device shown in FIG. 12 is in an RRC connected state. Optionally, because the terminal side device may fail to receive the multicast service, the terminal side device may feed back the failure to the access network side device according to the method in the first embodiment. The access network side device retransmits, in the unicast manner, a data packet that fails to be received in the multicast service. If the terminal side device fails to receive the multicast service in the multicast manner, the terminal side device sends a notification to the access network side device, so as to indicate which multicast service received on the RLC entity corresponding to the multicast manner fails. Optionally, the notification indicates a specific data packet or specific data packets in the multicast service that fail to be received. The access network side device retransmits, in the unicast manner by using a PDCP layer, an RLC layer, a MAC layer, or a physical layer, the data packet that fails to be received. For example, if the terminal side device fails to receive the multicast service on the RLC entity corresponding to the unicast manner, the terminal side device sends an RLC status report to indicate which multicast service received on the RLC entity corresponding to the unicast manner fails, and optionally, the RLC status report specifically indicates which data packet or data packets of the multicast service fails to be received. The access network side device may retransmit, on the RLC entity corresponding to the unicast manner, the data packet that the terminal side device fails to receive. The terminal side device may count a quantity of retransmission times of the RLC entity corresponding to the unicast manner. When the quantity reaches a maximum quantity of retransmission times, the terminal may not trigger a radio link failure or not initiate RRC re-establishment. Further, the terminal side device indicates, to the access network side device, a specific data packet or specific data packets in a multicast service that still fail to be received.
   In the case shown in FIG. 12 (embodiment not covered by the claimed invention, but an examples suitable for understanding the invention), when the access network side device sends a plurality of multicast services in the unicast manner, the plurality of multicast services may be sent through a same unicast channel. Alternatively, the plurality of multicast services may be respectively sent through unicast channels respectively corresponding to the plurality of multicast services, and each unicast channel is in a one-to-one correspondence with each multicast service.
(2) As shown in FIG. 13 (an embodiment not covered by the claimed invention, but an examples suitable for understanding the invention), a multicast radio bearer used by the terminal side device to receive the multicast service sent in the unicast manner and a multicast radio bearer used to receive the multicast service sent in the multicast manner are different from each other, and are respectively a bearer corresponding to the unicast manner and a bearer corresponding to the multicast manner. The bearers include an RLC entity corresponding to the unicast manner and an RLC entity corresponding to the multicast manner respectively. The two RLC entities are different. Optionally, the RLC entity corresponding to the unicast manner is connected to a PDCP entity corresponding to the unicast manner, and the RLC entity corresponding to the multicast manner is connected to a PDCP entity corresponding to the multicast manner. The two PDCP entities are also different. Optionally, the RLC entity corresponding to the unicast manner and the RLC entity corresponding to the multicast manner are connected to a same MAC entity.

Optionally, after receiving the data packet of the multicast service, the PDCP entity corresponding to the unicast manner and the PDCP entity corresponding to the multicast manner may directly submit the data packet to an upper layer of the PDCP entity without performing repetition detection.

Optionally, the PDCP entity corresponding to the multicast manner is a primary PDCP entity (an entity corresponding to a primary component carrier), and the PDCP entity corresponding to the unicast manner is a secondary PDCP entity (an entity corresponding to a secondary component carrier). The primary PDCP entity may be indicated by the access network side device. The primary PDCP entity of the access network side device may allocate a PDCP SN of a data packet on the primary PDCP entity and allocate a PDCP SN of a data packet on the secondary PDCP entity. The primary PDCP entity of the terminal side device may perform repetition detection based on the PDCP SN of the data packet on the primary PDCP entity and the PDCP SN of the data packet on the secondary PDCP entity.

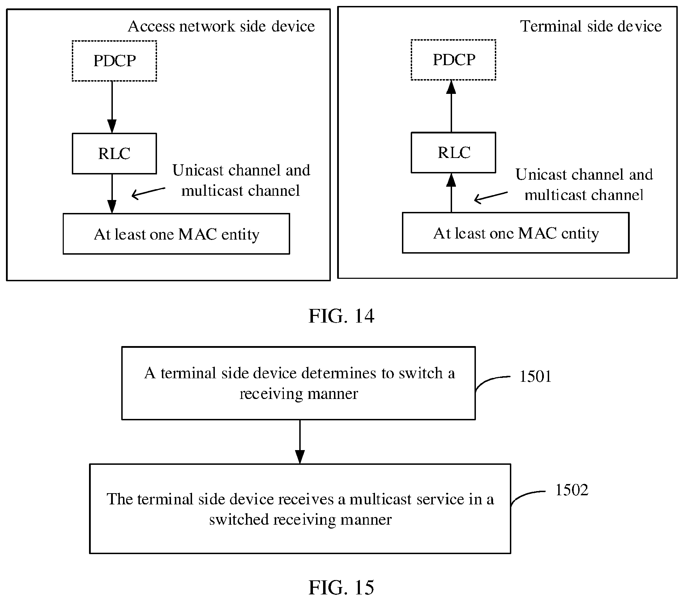

(3) As shown in FIG. 14 (an embodiment not covered by the claimed invention, but an examples suitable for understanding the invention), a multicast radio bearer used by the terminal side device to receive the multicast service sent in the unicast manner and a multicast radio bearer used to receive the multicast service sent in the multicast manner are the same. The multicast radio bearer includes one RLC entity of the terminal side device and one RLC entity of the access network side device, and the RLC entity of the terminal side device is equivalent to the RLC entity of the access network side device. In this case, a channel corresponding to the unicast manner and a channel corresponding to the multicast manner are multiplexed on a path in which the same RLC entity is located.

Optionally (an embodiment not covered by the claimed invention, but an examples suitable for understanding the invention), the multicast radio bearer has no PDCP entity between the terminal side device and the access network side device. In this case, for the multicast radio bearer, the RLC entity of the access network side device generates a data packet at the RLC layer and sends the data packet to a MAC entity, and the MAC entity generates, at the MAC layer, a data packet sent in the unicast manner and a data packet sent in the multicast manner. The data packet sent in the unicast manner and the data packet sent in the multicast manner are the same. The MAC entity of the access network side device sends the same data packets by using an identifier corresponding to the unicast manner and an identifier corresponding to the multicast manner. For the multicast radio bearer, the RLC entity of the terminal side device performs repetition detection on the received data packets based on RLC SNs, and discards a repeated data packet with the same RLC SN.

Optionally (an embodiment not covered by the claimed invention, but an examples suitable for understanding the invention), the multicast radio bearer has no PDCP entity between the terminal side device and the access network side device. In this case, for the multicast radio bearer, the RLC entity of the access network side device generates, at the RLC layer, a data packet sent in the unicast manner and a data packet sent in the multicast manner. The data packet sent in the unicast manner and the data packet sent in the multicast manner are the same, and RLC SNs are set for the same data packets. The RLC entity of the access network side device sends the same data packets by using an identifier corresponding to the unicast manner and an identifier corresponding to the multicast manner. For the multicast radio bearer, the RLC entity of the terminal side device performs repetition detection on the received data packets based on the RLC SNs, and discards a repeated data packet with the same RLC SN.

Optionally (an embodiment not covered by the claimed invention, but an examples suitable for understanding the invention), the RLC entity of the terminal side device is connected to one PDCP entity of the terminal side device, the RLC entity of the access network side device is connected to one PDCP entity of the access network side device, and the two PDCP entities are peer to peer between the access network side device and the terminal side device. In this case, for the multicast radio bearer, a PDCP entity of the access network side device generates, at a PDCP layer, a data packet sent in the unicast manner and a data packet sent in the multicast manner. The data packet sent in the unicast manner and the data packet sent in the multicast manner are the same, PDCP SNs are set for the same data packets, and the same data packets are sent by using an identifier corresponding to the unicast manner and an identifier corresponding to the multicast manner. For the multicast radio bearer, a PDCP entity of the terminal side device performs repetition detection on the received data packets based on the PDCP SNs, and discards a repeated data packet with the same PDCP SN.

According to the technical solution provided in the second embodiment, the terminal side device may receive, in parallel through two channels, the multicast services sent by the access network side device. This can improve reliability of the multicast service.

A third embodiment of this application provides a multicast service transmission control method. As shown in FIG. 15, the method includes the following content. The third embodiment of this application relates to how a terminal side device switches a receiving manner when receiving a multicast service. The third embodiment may be used as further refined method steps of the first embodiment and the second embodiment, or may be performed independent of the methods in the first embodiment and the second embodiment.

1501: A terminal side device determines to switch a receiving manner for a multicast service, where a receiving manner used after switching is an only unicast manner, an only multicast manner, or a unicast-multicast manner.

The terminal side device may receive indication information of an access network side device, where the indication information indicates to switch the receiving manner for the multicast service. Optionally, the terminal side device switches receiving manners for all to-be-received multicast services under control of the indication information. Optionally, the indication information further indicates an identifier of a multicast service, so as to indicate, to the terminal side device, a specific multicast service for which a receiving manner needs to be switched. For another multicast service that is not indicated in the indication information, the terminal side device does not switch a receiving manner for the another multicast service.

Optionally, the indication information further indicates an effective time of the switched receiving manner. The effective time is a time at which the switched receiving manner is allowed to be used to detect a PDCCH. The terminal side device may receive the multicast service in the switched receiving manner at the effective time based on the indication of the access network side device. Before the effective time arrives, the terminal side device may receive the multicast service in a receiving manner before switching or in the unicast-multicast manner. The effective time may be a time offset. After receiving the indication information, the terminal side device waits for the time offset to take effect switching of the receiving manner, that is, receives the multicast service in the switched receiving manner. This effective time may be represented by one or a combination of more of a system frame number, a slot number, a time domain symbol, and a sequence number of a data packet (for example, a PDCP SN or an RLC SN). An example in which the effective time is represented by using a sequence number of a data packet is used. When a data packet received by the terminal side device in the receiving manner before switching is a specified sequence number, switching of the receiving manner takes effect.

The access network side device may use an RRC message to carry the indication information and send the RRC message to the terminal side device. The RRC message may specifically indicate, in an enumeration manner, the receiving manner used after switching. Specifically, the RRC message may explicitly indicate, by using three enumeration information elements {only unicast manner, only multicast manner, unicast-multicast manner}, the receiving manner used after current switching. The RRC message may alternatively indicate, by using two enumeration information elements, the receiving manner used after current switching. The terminal side device may specify, based on the indication of the enumeration information elements, the receiving manner used after current switching. For example, for two enumeration information elements {only unicast manner, only multicast manner}, if an enumeration information element is {only unicast manner}, the terminal side device receives the multicast service in the only unicast manner; if the enumeration information element is {only multicast manner}, the terminal side device receives the multicast service in the only multicast manner; or if neither of the two enumeration information elements appears, the terminal side device receives the multicast service in the unicast manner and the multicast manner in parallel.

Optionally, the access network side device further indicates the terminal side device whether to perform duplicate detection on a data packet, for example, indicates the terminal side device not to perform duplicate detection on a data packet when the terminal side device receives the multicast service in the only unicast manner or the only multicast manner.

Alternatively, the terminal side device may independently determine the switching of the receiving manner of the multicast service without the receiving manner switching indication of the access network-side device. For example, after sending the feedback information described in the first embodiment, the terminal side device may wait for a preset time to attempt to switch to a receiving manner to receive the multicast service. The terminal may notify the access network device of the preset time. The preset time is indicated by the access network side device, or is predefined in a protocol. After the terminal side device determines the to-be-switched receiving manner, the terminal side device may first request, from the access network side device, to switch the receiving manner, and after the access network side device accepts the request, the terminal side device performs switching of the receiving manner.

1502: The terminal side device receives the multicast service based on the switched receiving manner.

In 1501, before the terminal side device determines to switch the receiving manner of the multicast service, the terminal side device may send capability information to the access network side device, where the capability information indicates receiving manners to which the terminal side device can switch, so that the access network side device indicates, to the terminal side device in the receiving manners to which the terminal side device can switch, the receiving manner to be switched to.

For how the terminal side device receives the multicast service, refer to the foregoing descriptions of the first embodiment and the second embodiment.

When the receiving manner to be switched to is only the multicast manner or the unicast-multicast manner, the access network side device may indicate an RLC SN or a corresponding PDCP SN of a start data packet on a channel (for example, a logical channel) corresponding to the unicast manner, so that the following case can be avoided: when receiving a data packet of the multicast service in the multicast manner, the terminal side device considers that the received RLC SN or PDCP SN does not start from 0, and therefore a packet loss occurs.

When the receiving manner to be switched to is only the unicast manner or the unicast-multicast manner, the access network side device may indicate an RLC SN or a corresponding PDCP SN of a start data packet on a channel (for example, a logical channel) corresponding to the unicast manner, so that the following case can be avoided: when receiving a data packet of the multicast service in the unicast manner, the terminal side device considers that the received RLC SN or PDCP SN does not start from 0, and therefore a packet loss occurs.

In a case of switching from the only multicast manner to the unicast-to-multicast manner, the terminal side device may trigger re-establishment of an RLC entity on the channel corresponding to the unicast manner, for example, set an RLC sequence number to 0, and may further notify the access network side device of a specific data packet or specific data packets that fail to be received, so that the access network side device performs retransmission.

In a case of switching from the only unicast manner to the only multicast manner, the terminal side device may receive, in the multicast manner, an RLC segment data packet or an RLC complete data packet that is discarded in the only unicast manner, and perform processing at the RLC entity corresponding to the multicast manner.

In a case of switching from the only multicast manner to the only unicast manner, and the RLC entity corresponding to the unicast manner and the RLC entity corresponding to the multicast manner are different, the terminal side device may trigger re-establishment of the RLC entity on the channel corresponding to the unicast manner, for example, set the RLC sequence number to 0. The terminal side device may further notify the access network side device that the multicast service received in the switched unicast manner succeeds or fails.

It may be understood that the access network side device may receive, as described in the first embodiment, the feedback information (in particular, a feedback of a receiving failure) sent by the terminal side device, and send the indication information in response to the feedback information, so as to implement switching of the receiving manner. The access network side device may not be limited to sending the indication information after receiving the feedback information sent by the terminal side device. For example, the indication information may be sent when any network environment changes, so as to indicate the terminal side device to switch the receiving manner.

The indication information may be physical layer signaling, for example, downlink control information (downlink control information, DCI) carried on a downlink control channel.

The indication information may be carried in a MAC message in the following case: the MAC message includes a MAC subheader and a MAC CE. The MAC subheader includes a logical channel identifier, the logical channel identifier indicates that the MAC CE is about receiving manner switching, and the MAC CE carries content of the indication information (that is, the receiving manner to be switched to).

The indication information may be carried in an RRC message, for example, carried in an RRC reconfiguration message dedicated to the terminal side device, or carried in a broadcast message (for example, a master information block or a system information block).

The indication information may be carried in a PDCP message. The PDCP message includes a PDCP subheader and a PDCP payload. The PDCP subheader indicates that the PDCP payload is about receiving manner switching, and the PDCP payload carries content of the indication information (that is, the receiving manner to be switched to).

If the access network side device is an architecture of a center unit (center unit, CU) and a distributed unit (distributed unit, DU), a GTP tunnel corresponding to the unicast manner and a GTP tunnel corresponding to the multicast manner are connected between the CU and the DU for a same multicast service of a same terminal side device. The GTP tunnel corresponding to the unicast manner is connected to a logical channel corresponding to the unicast manner, and the GTP tunnel corresponding to the multicast manner is connected to a logical channel corresponding to the multicast manner, so as to implement receiving in the unicast manner and the multicast manner. The CU and the DU may establish different GTP tunnels corresponding to the unicast manner for different terminal side devices.

In another CU-DU architecture, one GTP tunnel is established between the CU and the DU for a same multicast service of a same terminal side device. The GTP tunnel is connected to a logical channel corresponding to the unicast manner and a logical channel corresponding to the multicast manner. The DU delivers a multicast service sent in the unicast manner to the logical channel corresponding to the unicast manner through the GTP tunnel, so as to implement transmission in the unicast manner. The DU delivers a multicast service sent in the multicast manner to the logical channel corresponding to the multicast manner through the GTP tunnel, so as to implement transmission in the multicast manner. The CU and the DU may establish different GTP tunnels corresponding to the unicast manner for different terminal side devices.

In the CU-DU architecture, if the RLC entity corresponding to the multicast manner and the RLC entity corresponding to the unicast manner are different, the CU may notify the DU of an RLC SN of a start data packet on the RLC entity corresponding to the multicast manner (for example, the RLC SN is included in a GTP data packet sent by the CU to the DU), so that the terminal side device is prevented from receiving a repeated data packet.

According to the technical solution provided in the third embodiment ,, the terminal side device can implement switching of a receiving manner for a multicast service, thereby improving user experience.

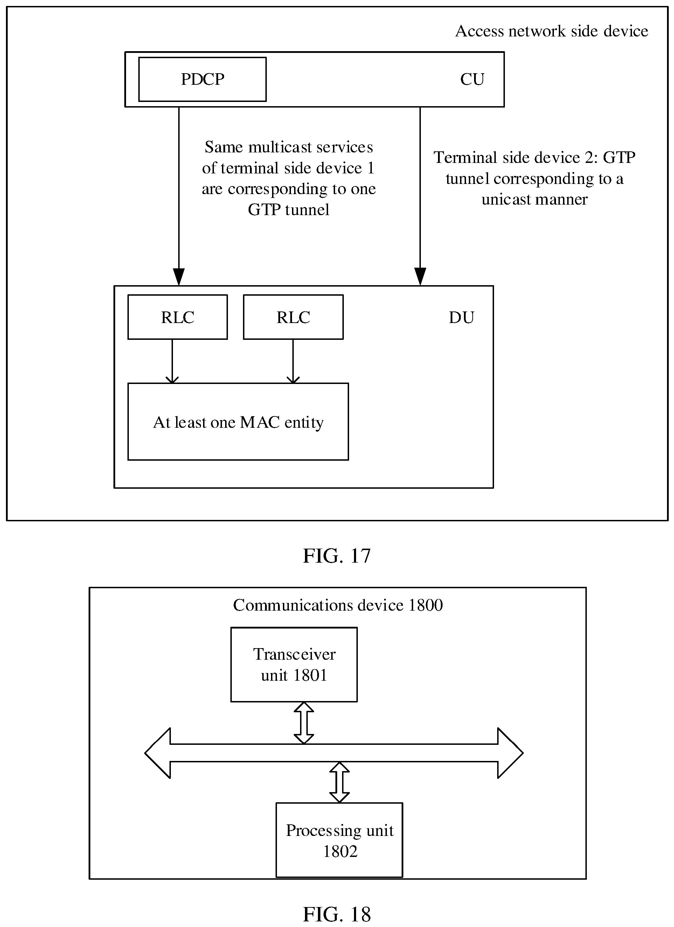

A fourth embodiment of this application provides a communications device 1800. FIG. 18 shows a schematic diagram of a structure of the communications device.

In a possible implementation, the communications device 1800 may be the terminal side device in the foregoing first embodiment, the second embodiment, or the third embodiment, or a chip system used for an access network side device. In this case, the communications device 1800 includes a transceiver unit 1801 and a processing unit 1802. The transceiver unit 1801 is configured to perform the receiving or sending action of the terminal side device in any one of the foregoing first embodiment, second embodiment, and third embodiment, and the processing unit 1802 is configured to perform processing actions such as determining of the terminal side device in any one of the foregoing first embodiment, second embodiment, and third embodiment.

In another possible implementation, the communications device 1800 may be the access network side device in the foregoing first embodiment, second embodiment, or third embodiment or a chip system used for the access network side device. In this case, the communications device 1800 includes a processing unit 1802 and a transceiver unit 1801. The processing unit 1802 is configured to perform processing actions such as determining of the access network side device in any one of the foregoing first embodiment, second embodiment, and third embodiment. The transceiver unit 1802 is configured to perform the sending or receiving action of the access network side device in any one of the foregoing first embodiment, second embodiment, and third embodiment.

In another specific possible implementation, the communications device 1800 includes a processor and a memory, the memory stores a computer program, and when the computer program is invoked by the processor, the communications device may be enabled to perform actions performed by the terminal side device or the access network side device in the foregoing method embodiments. Specifically, the computer program includes a plurality of data structures, and each data structure is separately used to implement a function of each protocol layer defined in the 3GPP standard.

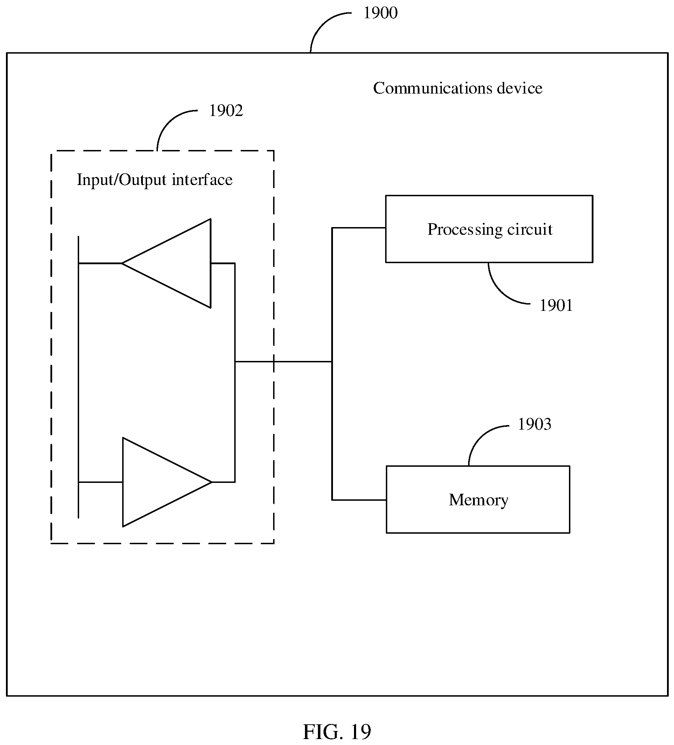

In a specific possible implementation, in the communications device 1900 shown in FIG. 19, the processing unit 1802 of the communications device 1800 may be specifically a baseband processing circuit 1901, and the transceiver unit 1802 may be a baseband input or output circuit 1902. The baseband processing circuit 1901 implements, for example, processing actions such as generation of the foregoing messages and various determining actions in a form of at least one processor (processor). Optionally, the communications device 1900 may further include a memory 1903, and a radio frequency antenna, a bus, a communications interface, and the like that are used to send and receive a radio signal in a wireless communications system. The bus may be a peripheral component interconnect (peripheral component interconnect, PCI) bus, an extended industry standard architecture (extended industry standard architecture, EISA) bus, or the like. The communication interface may be a wired communication interface, a wireless communication interface, or a combination thereof. The wired communication interface may be, for example, an ethernet interface. The ethernet interface may be an optical interface, an electrical interface, or a combination thereof. The wireless communications interface may be a wireless local area network interface.

According to the communications device provided in the fourth embodiment, a technical problem in the foregoing method embodiments can be resolved, and a corresponding technical effect can be implemented.

In each embodiment of this application, "A and/or B" indicates that A exists separately, B exists separately, or both A and B exist. "First", "second", and the like are only used to distinguish different information names, but do not constitute a limitation of a sequence.

A person of ordinary skill in the art may understand that all or a part of the processes of the methods in embodiments may be implemented by a computer program instructing relevant hardware. The program may be stored in a computer-readable storage medium. When the program runs, the processes of the methods in embodiments are performed. The foregoing storage medium includes: any medium that can store program code, such as a ROM, a RAM, a magnetic disk, or an optical disc.

The foregoing embodiments disclose only preferred embodiments of this application, and are not intended to limit the claims of this application. A person of ordinary skill in the art may understand that all or a part of procedures for implementing the foregoing embodiments and equivalent modifications made according to the claims of this application shall fall within the scope of the claims.
For example, after sending the feedback information described in the first embodiment, the terminal side device may wait for a preset time to attempt to switch to a receiving manner to receive the multicast service. The terminal may notify the access network device of the preset time. The preset time is indicated by the access network side device, or is predefined in a protocol. After the terminal side device determines the to-be-switched receiving manner, the terminal side device may first request, from the access network side device, to switch the receiving manner, and after the access network side device accepts the request, the terminal side device performs switching of the receiving manner.

1502: The terminal side device receives the multicast service based on the switched receiving manner.

In 1501, before the terminal side device determines to switch the receiving manner of the multicast service, the terminal side device may send capability information to the access network side device, where the capability information indicates receiving manners to which the terminal side device can switch, so that the access network side device indicates, to the terminal side device in the receiving manners to which the terminal side device can switch, the receiving manner to be switched to.

For how the terminal side device receives the multicast service, refer to the foregoing descriptions of the first embodiment and the second embodiment.

When the receiving manner to be switched to is only the multicast manner or the unicast-multicast manner, the access network side device may indicate an RLC SN or a corresponding PDCP SN of a start data packet on a channel (for example, a logical channel) corresponding to the unicast manner, so that the following case can be avoided: when receiving a data packet of the multicast service in the multicast manner, the terminal side device considers that the received RLC SN or PDCP SN does not start from 0, and therefore a packet loss occurs.

When the receiving manner to be switched to is only the unicast manner or the unicast-multicast manner, the access network side device may indicate an RLC SN or a corresponding PDCP SN of a start data packet on a channel (for example, a logical channel) corresponding to the unicast manner, so that the following case can be avoided: when receiving a data packet of the multicast service in the unicast manner, the terminal side device considers that the received RLC SN or PDCP SN does not start from 0, and therefore a packet loss occurs.

In a case of switching from the only multicast manner to the unicast-to-multicast manner, the terminal side device may trigger re-establishment of an RLC entity on the channel corresponding to the unicast manner, for example, set an RLC sequence number to 0, and may further notify the access network side device of a specific data packet or specific data packets that fail to be received, so that the access network side device performs retransmission.

In a case of switching from the only unicast manner to the only multicast manner, the terminal side device may receive, in the multicast manner, an RLC segment data packet or an RLC complete data packet that is discarded in the only unicast manner, and perform processing at the RLC entity corresponding to the multicast manner.

In a case of switching from the only multicast manner to the only unicast manner, and the RLC entity corresponding to the unicast manner and the RLC entity corresponding to the multicast manner are different, the terminal side device may trigger re-establishment of the RLC entity on the channel corresponding to the unicast manner, for example, set the RLC sequence number to 0. The terminal side device may further notify the access network side device that the multicast service received in the switched unicast manner succeeds or fails.

It may be understood that the access network side device may receive, as described in the first embodiment, the feedback information (in particular, a feedback of a receiving failure) sent by the terminal side device, and send the indication information in response to the feedback information, so as to implement switching of the receiving manner. The access network side device may not be limited to sending the indication information after receiving the feedback information sent by the terminal side device. For example, the indication information may be sent when any network environment changes, so as to indicate the terminal side device to switch the receiving manner.

The indication information may be physical layer signaling, for example, downlink control information (downlink control information, DCI) carried on a downlink control channel.

The indication information may be carried in a MAC message in the following case: the MAC message includes a MAC subheader and a MAC CE. The MAC subheader includes a logical channel identifier, the logical channel identifier indicates that the MAC CE is about receiving manner switching, and the MAC CE carries content of the indication information (that is, the receiving manner to be switched to).

The indication information may be carried in an RRC message, for example, carried in an RRC reconfiguration message dedicated to the terminal side device, or carried in a broadcast message (for example, a master information block or a system information block).

The indication information may be carried in a PDCP message. The PDCP message includes a PDCP subheader and a PDCP payload. The PDCP subheader indicates that the PDCP payload is about receiving manner switching, and the PDCP payload carries content of the indication information (that is, the receiving manner to be switched to).

If the access network side device is an architecture of a center unit (center unit, CU) and a distributed unit (distributed unit, DU), a GTP tunnel corresponding to the unicast manner and a GTP tunnel corresponding to the multicast manner are connected between the CU and the DU for a same multicast service of a same terminal side device. The GTP tunnel corresponding to the unicast manner is connected to a logical channel corresponding to the unicast manner, and the GTP tunnel corresponding to the multicast manner is connected to a logical channel corresponding to the multicast manner, so as to implement receiving in the unicast manner and the multicast manner. The CU and the DU may establish different GTP tunnels corresponding to the unicast manner for different terminal side devices.

In another CU-DU architecture, one GTP tunnel is established between the CU and the DU for a same multicast service of a same terminal side device. The GTP tunnel is connected to a logical channel corresponding to the unicast manner and a logical channel corresponding to the multicast manner. The DU delivers a multicast service sent in the unicast manner to the logical channel corresponding to the unicast manner through the GTP tunnel, so as to implement transmission in the unicast manner. The DU delivers a multicast service sent in the multicast manner to the logical channel corresponding to the multicast manner through the GTP tunnel, so as to implement transmission in the multicast manner. The CU and the DU may establish different GTP tunnels corresponding to the unicast manner for different terminal side devices.

In the CU-DU architecture, if the RLC entity corresponding to the multicast manner and the RLC entity corresponding to the unicast manner are different, the CU may notify the DU of an RLC SN of a start data packet on the RLC entity corresponding to the multicast manner (for example, the RLC SN is included in a GTP data packet sent by the CU to the DU), so that the terminal side device is prevented from receiving a repeated data packet.

According to the technical solution provided in the third embodiment, the terminal side device can implement switching of a receiving manner for a multicast service, thereby improving user experience.

A fourth embodiment of this application provides a communications device 1800. FIG. 18 shows a schematic diagram of a structure of the communications device.

In a possible implementation, the communications device 1800 may be the terminal side device in the foregoing first embodiment, the second embodiment, or the third embodiment, or a chip system used for an access network side device. In this case, the communications device 1800 includes a transceiver unit 1801 and a processing unit 1802. The transceiver unit 1801 is configured to perform the receiving or sending action of the terminal side device in any one of the foregoing first embodiment, second embodiment, and third embodiment, and the processing unit 1802 is configured to perform processing actions such as determining of the terminal side device in any one of the foregoing first embodiment, second embodiment, and third embodiment.

In another possible implementation, the communications device 1800 may be the access network side device in the foregoing first embodiment, second embodiment, or third embodiment or a chip system used for the access network side device. In this case, the communications device 1800 includes a processing unit 1802 and a transceiver unit 1801. The processing unit 1802 is configured to perform processing actions such as determining of the access network side device in any one of the foregoing first embodiment, second embodiment, and third embodiment. The transceiver unit 1802 is configured to perform the sending or receiving action of the access network side device in any one of the foregoing first embodiment, second embodiment, and third embodiment.

In another specific possible implementation, the communications device 1800 includes a processor and a memory, the memory stores a computer program, and when the computer program is invoked by the processor, the communications device may be enabled to perform actions performed by the terminal side device or the access network side device in the foregoing method embodiments. Specifically, the computer program includes a plurality of data structures, and each data structure is separately used to implement a function of each protocol layer defined in the 3GPP standard.

In a specific possible implementation, in the communications device 1900 shown in FIG. 19, the processing unit 1802 of the communications device 1800 may be specifically a baseband processing circuit 1901, and the transceiver unit 1802 may be a baseband input or output circuit 1902. The baseband processing circuit 1901 implements, for example, processing actions such as generation of the foregoing messages and various determining actions in a form of at least one processor (processor). Optionally, the communications device 1900 may further include a memory 1903, and a radio frequency antenna, a bus, a communications interface, and the like that are used to send and receive a radio signal in a wireless communications system. The bus may be a peripheral component interconnect (peripheral component interconnect, PCI) bus, an extended industry standard architecture (extended industry standard architecture, EISA) bus, or the like. The communication interface may be a wired communication interface, a wireless communication interface, or a combination thereof. The wired communication interface may be, for example, an ethernet interface. The ethernet interface may be an optical interface, an electrical interface, or a combination thereof. The wireless communications interface may be a wireless local area network interface.

According to the communications device provided in the fourth embodiment, a technical problem in the foregoing method embodiments can be resolved, and a corresponding technical effect can be implemented.

In each embodiment of this application, "A and/or B" indicates that A exists separately, B exists separately, or both A and B exist. "First", "second", and the like are only used to distinguish different information names, but do not constitute a limitation of a sequence.

A person of ordinary skill in the art may understand that all or a part of the processes of the methods in embodiments may be implemented by a computer program instructing relevant hardware. The program may be stored in a computer-readable storage medium. When the program runs, the processes of the methods in embodiments are performed. The foregoing storage medium includes: any medium that can store program code, such as a ROM, a RAM, a magnetic disk, or an optical disc.

## Claims

1. A multicast transmission control method, comprising:
receiving, by a terminal side device, first configuration information sent by an access network side device, wherein the first configuration information indicates an identifier of a protocol data unit, PDU, session to which a multicast service belongs and a failure event of receiving of the multicast service;
receiving (201), by the terminal side device, the multicast service; and
sending (202), by the terminal side device, feedback information for the multicast service to the access network side device, wherein the feedback information indicates that receiving of the multicast service succeeds or receiving of the multicast service fails,
wherein, when the failure event occurs, the feedback information indicates that receiving of the multicast service fails, and
wherein, when receiving of the multicast service fails, the feedback information comprises the failure event of receiving of the multicast service and the identifier of the PDU session to which the multicast service belongs.

2. The method according to claim 1, wherein when receiving of the multicast service fails, the feedback information further comprises at least one piece of the following information: a quantity of data packets failing to be received in the multicast service, an identifier of the multicast service, a multicast manner and/or a unicast manner used to receive the multicast service, and a request for the unicast manner when the multicast service fails to be received in the multicast manner.

3. The method according to claim 1 or 2, wherein the failure event comprises one of the following failure events:
at least one data packet of the multicast service fails to be received within a first time;
a first quantity of data packets of the multicast service that fail to be received reaches a first threshold; and
a first quantity of data packets of the multicast service that fail to be received within the first time reaches a second threshold.

4. The method according to any one of claims 1 to 3, wherein the first configuration information further indicates the identifier of the multicast service.

5. The method according to any one of claims 1 to 4, wherein the sending, by the terminal side device, feedback information for the multicast service to an access network side device comprises:
sending, by the terminal side device, the feedback information for the multicast service to the access network side device by using a random access process and using a random access resource specific to the multicast service.

6. A multicast transmission control method, comprising:
sending, by an access network side device, first configuration information to a terminal side device, wherein the first configuration information indicates an identifier of a protocol data unit, PDU, session to which a multicast service belongs and a failure event of receiving of the multicast service;
sending (201), by the access network side device, the multicast service to the terminal side device; and
receiving (202), by the access network side device, feedback information that is for the multicast service and sent by the terminal side device, wherein the feedback information indicates that the terminal side device successfully receives the multicast service or fails to receive the multicast service,
wherein, when the failure event occurs, the feedback information indicates that receiving of the multicast service fails, and
wherein, when receiving of the multicast service fails, the feedback information comprises the failure event of receiving of the multicast service and the identifier of the PDU session to which the multicast service belongs.

7. The method according to claim 6, wherein when the terminal side device fails to receive the multicast service, the feedback information further comprises at least one piece of the following information: a quantity of data packets failing to be received in the multicast service, an identifier of the multicast service, a multicast manner and/or a unicast manner used to receive the multicast service, and a request for the unicast manner when the multicast service fails to be received in the multicast manner.

8. The method according to claim 6 or 7, wherein the failure event comprises one of the following failure events:
at least one data packet of the multicast service fails to be received within a first time;
a first quantity of data packets of the multicast service that fail to be received reaches a first threshold; and
a first quantity of data packets of the multicast service that fail to be received within the first time reaches a second threshold.

9. The method according to any one of claims 6 to 8, wherein the first configuration information further indicates the identifier of the multicast service.

10. The method according to any one of claims 6 to 9, wherein the receiving, by the access network side device, feedback information that is for the multicast service and sent by the terminal side device comprises:
receiving, by the access network side device on a random access resource specific to the multicast service, the feedback information that is for the multicast service and sent by the terminal side device.

11. A terminal side device (1900), comprising a memory (1903) storing a computer program and a processor (1901), wherein the computer program, when executed by the processor, causes the terminal side device to perform the method for the terminal side device according to any one of claims 1 to 5.

12. An access network side device (1900), comprising a memory (1903) storing a computer program and a processor (1901), wherein the computer program, when executed of by the processor, causes the access network side device to perform the method for the access network side device according to any one of claims 6 to 10.

13. A computer-readable storage medium, comprising a memory storing a computer program, wherein the computer program, when executed by a terminal side device, causes the terminal side device according to any one of claims 1 to 5.

14. A computer-readable storage medium, comprising a memory storing a computer program, wherein the computer program, when executed by an access network side device, causes the access network side device according to any one of claims 6 to 10.

## Patentansprüche

1. Multicast-Übertragungssteuerverfahren, umfassend:
Empfangen, durch eine endgerätseitige Vorrichtung, von ersten Konfigurationsinformationen, die durch eine zugangsnetzwerkseitige Vorrichtung gesendet werden, wobei die ersten Konfigurationsinformationen eine Kennung einer Protokolldateneinheits(PDU)-Sitzung, zu der ein Multicast-Dienst gehört, und ein Empfangsfehlerereignis des Multicast-Dienstes angeben;
Empfangen (201), durch die endgerätseitige Vorrichtung, des Multicast-Dienstes; und
Senden (202), durch die endgerätseitige Vorrichtung, von Feedbackinformationen für den Multicast-Dienst an die zugangsnetzwerkseitige Vorrichtung, wobei die Feedbackinformationen angeben, dass das Empfangen des Multicast-Dienstes erfolgreich ist oder das Empfangen des Multicast-Dienstes fehlschlägt,
wobei, wenn das Fehlerereignis auftritt, die Feedbackinformationen angeben, dass das Empfangen des Multicast-Dienstes fehlschlägt, und
wobei, wenn das Empfangen des Multicast-Dienstes fehlschlägt, die Feedbackinformationen das Empfangsfehlerereignis des Multicast-Dienstes und die Kennung der PDU-Sitzung, zu welcher der Multicast-Dienst gehört, umfassen.

2. Verfahren nach Anspruch 1, wobei, wenn das Empfangen des Multicast-Dienstes fehlschlägt, die Feedbackinformationen ferner mindestens eine der folgenden Informationen umfassen:
eine Anzahl an Datenpaketen, deren Empfang in dem Multicast-Dienst fehlschlägt, eine Kennung des Multicast-Dienstes, eine Multicast-Art und/oder eine Unicast-Art, die zum Empfangen des Multicast-Dienstes verwendet wird/werden, und eine Anfrage für die Unicast-Art, wenn der Empfang des Multicast-Dienstes in der Multicast-Art fehlschlägt.

3. Verfahren nach Anspruch 1 oder 2, wobei das Fehlerereignis eines der folgenden Fehlerereignisse umfasst:
der Empfang von mindestens einem Datenpaket des Multicast-Dienstes schlägt innerhalb einer ersten Zeit fehl;
eine erste Anzahl an Datenpaketen des Multicast-Dienstes, deren Empfang fehlschlägt, erreicht einen ersten Schwellenwert; und eine erste Anzahl an Datenpaketen des Multicast-Dienstes, deren Empfang innerhalb der ersten Zeit fehlschlägt, erreicht einen zweiten Schwellenwert.

4. Verfahren nach einem der Ansprüche 1 bis 3, wobei die ersten Konfigurationsinformationen ferner die Kennung des Multicast-Dienstes angeben.

5. Verfahren nach einem der Ansprüche 1 bis 4, wobei das Senden, durch die endgerätseitige Vorrichtung, von Feedbackinformationen für den Multicast-Dienst an die zugangsnetzwerkseitige Vorrichtung Folgendes umfasst:
Senden, durch die endgerätseitige Vorrichtung, der Feedbackinformationen für den Multicast-Dienst an die zugangsnetzwerkseitige Vorrichtung durch Verwenden eines Direktzugriffsprozesses und unter Verwendung einer für den Multicast-Dienst spezifischen Direktzugriffsressource.

6. Multicast-Übertragungssteuerverfahren, umfassend:
Senden, durch eine zugangsnetzwerkseitige Vorrichtung, von ersten Konfigurationsinformationen an eine endgerätseitige Vorrichtung, wobei die ersten Konfigurationsinformationen eine Kennung einer Protokolldateneinheits(PDU)-Sitzung, zu der ein Multicast-Dienst gehört, und ein Empfangsfehlerereignis des Multicast-Dienstes angeben;
Senden (201), durch die zugangsnetzwerkseitige Vorrichtung, des Multicast-Dienstes an die endgerätseitige Vorrichtung; und
Empfangen (202), durch die zugangsnetzwerkseitige Vorrichtung, von Feedbackinformationen, die für den Multicast-Dienst bestimmt sind und durch die endgerätseitige Vorrichtung gesendet werden, wobei die Feedbackinformationen angeben, dass die endgerätseitige Vorrichtung den Multicast-Dienst erfolgreich empfängt oder das Empfangen des Multicast-Dienstes fehlschlägt, wobei, wenn das Fehlerereignis auftritt, die Feedbackinformationen angeben, dass das Empfangen des Multicast-Dienstes fehlschlägt, und
wobei, wenn das Empfangen des Multicast-Dienstes fehlschlägt, die Feedbackinformationen das Empfangsfehlerereignis des Multicast-Dienstes und die Kennung der PDU-Sitzung, zu welcher der Multicast-Dienst gehört, umfassen.

7. Verfahren nach Anspruch 6, wobei, wenn das Empfangen des Multicast-Dienstes durch die endgerätseitige Vorrichtung fehlschlägt, die Feedbackinformationen ferner mindestens eine der folgenden Informationen umfassen: eine Anzahl an Datenpaketen, deren Empfang in dem Multicast-Dienst fehlschlägt, eine Kennung des Multicast-Dienstes, eine Multicast-Art und/oder eine Unicast-Art, die zum Empfangen des Multicast-Dienstes verwendet wird/werden, und eine Anfrage für die Unicast-Art, wenn der Empfang des Multicast-Dienstes in der Multicast-Art fehlschlägt.

8. Verfahren nach Anspruch 6 oder 7, wobei das Fehlerereignis eines der folgenden Fehlerereignisse umfasst:
der Empfang von mindestens einem Datenpaket des Multicast-Dienstes schlägt innerhalb einer ersten Zeit fehl;
eine erste Anzahl an Datenpaketen des Multicast-Dienstes, deren Empfang fehlschlägt, erreicht einen ersten Schwellenwert; und eine erste Anzahl an Datenpaketen des Multicast-Dienstes, deren Empfang innerhalb der ersten Zeit fehlschlägt, erreicht einen zweiten Schwellenwert.

9. Verfahren nach einem der Ansprüche 6 bis 8, wobei die ersten Konfigurationsinformationen ferner die Kennung des Multicast-Dienstes angeben.

10. Verfahren nach einem der Ansprüche 6 bis 9, wobei das Empfangen, durch die zugangsnetzwerkseitige Vorrichtung, von Feedbackinformationen, die für den Multicast-Dienst bestimmt sind und durch die endgerätseitige Vorrichtung gesendet werden, Folgendes umfasst:
Empfangen, durch die zugangsnetzwerkseitige Vorrichtung auf einer für den Multicast-Dienst spezifischen Direktzugriffsressource, der Feedbackinformationen, die für den Multicast-Dienst bestimmt sind und durch die endgerätseitige Vorrichtung gesendet werden.

11. Endgerätseitige Vorrichtung (1900), umfassend einen Speicher (1903), der ein Computerprogramm speichert, und einen Prozessor (1901), wobei das Computerprogramm, wenn es durch den Prozessor ausgeführt wird, die endgerätseitige Vorrichtung veranlasst, das Verfahren für die endgerätseitige Vorrichtung nach einem der Ansprüche 1 bis 5 durchzuführen.

12. Zugangsnetzwerkseitige Vorrichtung (1900), umfassend einen Speicher (1903), der ein Computerprogramm speichert, und einen Prozessor (1901), wobei das Computerprogramm, wenn es durch den Prozessor ausgeführt wird, die zugangsnetzwerkseitige Vorrichtung veranlasst, das Verfahren für die zugangsnetzwerkseitige Vorrichtung nach einem der Ansprüche 6 bis 10 durchzuführen.

13. Computerlesbares Speichermedium, umfassend einen Speicher, der ein Computerprogramm speichert, wobei das Computerprogramm, wenn es durch eine endgerätseitige Vorrichtung ausgeführt wird, die endgerätseitige Vorrichtung nach einem der Ansprüche 1 bis 5 veranlasst.

14. Computerlesbares Speichermedium, umfassend einen Speicher, der ein Computerprogramm speichert, wobei das Computerprogramm, wenn es durch eine zugangsnetzwerkseitige Vorrichtung ausgeführt wird, die zugangsnetzwerkseitige Vorrichtung nach einem der Ansprüche 6 bis 10 veranlasst.

## Revendications

1. Procédé de commande de transmission de multidiffusion, comprenant :
la réception, par un dispositif côté terminal, de premières informations de configuration envoyées par un dispositif côté réseau d'accès, dans lequel les premières informations de configuration indiquent un identifiant d'une session d'unité de données de protocole, PDU, à laquelle appartient un service de multidiffusion et d'un événement d'échec de réception du service de multidiffusion ;
la réception (201), par le dispositif côté terminal, du service de multidiffusion ; et
l'envoi (202), par le dispositif côté terminal, d'informations de retour pour le service de multidiffusion au dispositif côté réseau d'accès, dans lequel les informations de retour indiquent que la réception du service de multidiffusion réussit ou que la réception du service de multidiffusion échoue,
dans lequel, lorsque l'évènement d'échec survient, les informations de retour indiquent que la réception du service de multidiffusion échoue, et
dans lequel, en cas d'échec de la réception du service de multidiffusion, les informations de retour comprennent l'événement d'échec de la réception du service de multidiffusion et l'identifiant de la session PDU à laquelle appartient le service de multidiffusion.

2. Procédé selon la revendication **1,** dans lequel, en cas d'échec de la réception du service de multidiffusion, les informations de retour comprennent en outre au moins l'une des informations suivantes : une quantité de paquets de données non reçus dans le service de multidiffusion, un identifiant du service de multidiffusion, un mode de multidiffusion et/ou un mode d'unidiffusion utilisé pour recevoir le service de multidiffusion, et une demande pour le mode d'unidiffusion lorsque le service de multidiffusion ne peut être reçu en mode de multidiffusion.

3. Procédé selon la revendication 1 ou 2, dans lequel l'événement d'échec comprend l'un des événements d'échec suivants :
au moins un paquet de données du service de multidiffusion n'a pas pu être reçu pendant une première période ;
une première quantité de paquets de données du service de multidiffusion qui ne sont pas reçus atteint un premier seuil ; et
une première quantité de paquets de données du service de multidiffusion qui ne sont pas reçus pendant la première période atteint un second seuil.

4. Procédé selon l'une quelconque des revendications 1 à 3, dans lequel les premières informations de configuration indiquent en outre l'identifiant du service de multidiffusion.

5. Procédé selon l'une quelconque des revendications 1 à 4, dans lequel l'envoi, par le dispositif côté terminal, d'informations de retour pour le service de multidiffusion à un dispositif côté réseau d'accès comprend :
l'envoi, par le dispositif côté terminal, d'informations de retour pour le service de multidiffusion au dispositif côté réseau d'accès à l'aide d'un processus d'accès aléatoire et à l'aide d'une ressource d'accès aléatoire spécifique au service de multidiffusion.

6. Procédé de commande de transmission de multidiffusion, comprenant :
l'envoi, par un dispositif côté réseau d'accès, de premières informations de configuration à un dispositif côté terminal, dans lequel les premières informations de configuration indiquent un identifiant d'une session d'unité de données de protocole, PDU, à laquelle appartient un service de multidiffusion et d'un événement d'échec de réception du service de multidiffusion ;
l'envoi (201), par le dispositif côté réseau d'accès, du service de multidiffusion au dispositif côté terminal ; et
la réception (202), par le dispositif côté réseau d'accès, d'informations de retour relatives au service de multidiffusion et envoyées par le dispositif côté terminal, dans lequel les informations de retour indiquent que le dispositif côté terminal reçoit avec succès le service de multidiffusion ou quand il échoue à recevoir le service de multidiffusion,
dans lequel, lorsque l'évènement d'échec survient, les informations de retour indiquent que la réception du service de multidiffusion échoue, et
dans lequel, en cas d'échec de la réception du service de multidiffusion, les informations de retour comprennent l'événement d'échec de la réception du service de multidiffusion et l'identifiant de la session PDU à laquelle appartient le service de multidiffusion.

7. Procédé selon la revendication 6, dans lequel, en cas d'échec de la réception du service de multidiffusion par le dispositif côté terminal, les informations de retour comprennent en outre au moins l'une des informations suivantes : une quantité de paquets de données non reçus dans le service de multidiffusion, un identifiant du service de multidiffusion, un mode de multidiffusion et/ou un mode d'unidiffusion utilisé pour recevoir le service de multidiffusion, et une demande pour le mode d'unidiffusion lorsque le service de multidiffusion ne peut être reçu en mode de multidiffusion.

8. Procédé selon la revendication 6 ou 7, dans lequel l'événement d'échec comprend l'un des événements d'échec suivants :
au moins un paquet de données du service de multidiffusion n'a pas pu être reçu pendant une première période;
une première quantité de paquets de données du service de multidiffusion qui ne sont pas reçus atteint un premier seuil ; et
une première quantité de paquets de données du service de multidiffusion qui ne sont pas reçus pendant la première période atteint un second seuil.

9. Procédé selon l'une quelconque des revendications 6 à 8, dans lequel les premières informations de configuration indiquent en outre l'identifiant du service de multidiffusion.

10. Procédé selon l'une quelconque des revendications 6 à 9, dans lequel la réception, par le dispositif côté réseau d'accès, d'informations de retour pour le service de multidiffusion et envoyées par le dispositif côté terminal comprend:
la réception, par le dispositif côté réseau d'accès sur une ressource d'accès aléatoire spécifique au service de multidiffusion, des informations de retour destinées au service de multidiffusion et envoyées par le dispositif côté terminal.

11. Dispositif côté terminal (1900), comprenant une mémoire (1903) stockant un programme informatique et un processeur (1901), dans lequel le programme informatique, lorsqu'il est exécuté par le processeur, amène le dispositif côté terminal à réaliser le procédé pour le dispositif côté terminal selon l'une quelconque des revendications 1 à 5.

12. Dispositif côté réseau d'accès (1900), comprenant une mémoire (1903) stockant un programme informatique et un processeur (1901), dans lequel le programme informatique, lorsqu'il est exécuté par le processeur, amène le dispositif côté réseau d'accès à réaliser le procédé pour le dispositif côté réseau d'accès selon l'une quelconque des revendications 6 à 10.

13. Support de stockage lisible par ordinateur, comprenant une mémoire stockant un programme informatique, dans lequel le programme informatique, lorsqu'il est exécuté par un dispositif côté terminal, amène le dispositif côté terminal selon l'une quelconque des revendications 1 à 5.

14. Support de stockage lisible par ordinateur, comprenant une mémoire stockant un programme informatique, dans lequel le programme informatique, lorsqu'il est exécuté par un dispositif côté réseau d'accès, amène le dispositif côté réseau d'accès selon l'une quelconque des revendications 6 à 10.
